(19) Europäisches Patentamt European Patent Office Office européen des brevets

(11) **EP 3 800 069 B1**

## (12) EUROPEAN PATENT SPECIFICATION

(45) Date of publication and mention
of the grant of the patent:
**27.03.2024 Bulletin 2024/13**

(21) Application number: **19834988.8**

(22) Date of filing: **10.07.2019**

(51) International Patent Classification (IPC):
**B60C 9/18** *(2006.01)*     **B29D 30/08** *(2006.01)*
**B60C 9/28** *(2006.01)*     **B60C 11/03** *(2006.01)*
**B60C 11/00** *(2006.01)*     **B29C 35/02** *(2006.01)*
**B60C 9/20** *(2006.01)*     **B60C 11/04** *(2006.01)*
**B60C 9/22** *(2006.01)*     **B60C 11/01** *(2006.01)*

(52) Cooperative Patent Classification (CPC):
**B60C 9/2006; B60C 9/185; B60C 9/28;
B60C 11/0083;** B60C 11/01; B60C 11/04;
B60C 2009/1842; B60C 2009/2209;
B60C 2009/283; B60C 2011/013; B60C 2011/0341;
B60C 2011/0348; B60C 2011/0353;
B60C 2011/0355; B60C 2200/06

(86) International application number:
**PCT/JP2019/027235**

(87) International publication number:
**WO 2020/013210 (16.01.2020 Gazette 2020/03)**

## (54) HEAVY-DUTY PNEUMATIC TIRE AND MANUFACTURING METHOD THEREOF

SCHWERLASTLUFTREIFEN UND VERFAHREN ZU SEINER HERSTELLUNG

PNEUMATIQUE POUR POIDS LOURDS ET PROCÉDÉ DE FABRICATION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.07.2018 JP 2018131539**

(43) Date of publication of application:
**07.04.2021 Bulletin 2021/14**

(73) Proprietor: **Sumitomo Rubber Industries, Ltd.
Kobe-shi, Hyogo 651-0072 (JP)**

(72) Inventors:
• **ATAKE, Ikuo
Kobe-shi, Hyogo 651-0072 (JP)**
• **SATO, Hana
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
EP-A1- 1 120 231     WO-A1-2017/045600
JP-A- H0 396 402     JP-A- H0 415 104
JP-A- 2001 130 217     JP-A- 2001 163 009
JP-A- 2004 196 142     JP-A- 2005 306 077
JP-A- 2008 049 967     JP-A- 2012 046 061
JP-A- 2018 154 075     US-A- 5 972 142
US-A1- 2001 008 158     US-A1- 2004 154 716
US-A1- 2011 315 288     US-A1- 2015 174 965
US-A1- 2017 334 249

**Description**

**TECHNICAL FIELD**

The present invention relates to heavy duty pneumatic tires and manufacturing methods thereof.

**BACKGROUND ART**

On the tread of a heavy duty pneumatic tire, circumferential grooves are normally formed so as to continuously extend in the circumferential direction. Accordingly, a plurality of land portions are formed in the tread so as to be aligned in the axial direction. A land portion located at an equator portion is referred to as a center land portion. A land portion located at each end portion of a tread surface is referred to as a shoulder land portion.
The circumferential length difference from the equator gradually increases from the equator toward the outer side in the axial direction. The shoulder land portion is likely to slip on a road surface, and thus wear is likely to occur in the shoulder land portion.
Wear of the shoulder land portion, that is, uneven wear of the tire, changes the contact pressure distribution of the tire in addition to the appearance of the tire, and thus may deteriorate the running performance and the durability of the tire. Various studies have been conducted in order to suppress occurrence of uneven wear (for example, PATENT LITERATURE 1).

**CITATION LIST**

[PATENT LITERATURE]

PATENT LITERATURE 1: Japanese Laid-Open Patent Publication No. 2008-049967 A method for manufacturing a pneumatic tire in accordance with the preamble of claim 1 is known from US 2001/008158 A1 and US 5 972 142 A.

**SUMMARY OF INVENTION**

[TECHNICAL PROBLEM]

In order to suppress occurrence of uneven wear, various studies have been conducted mainly through optimization of the profile of a tread. However, the reality is that technology to be able to completely suppress occurrence of uneven wear has not been established.
The present invention has been made in view of the above circumstances, and an object of the present invention is to provide a method for manufacturing a heavy duty pneumatic tire in which occurrence of uneven wear is suppressed.

[SOLUTION TO PROBLEM]

The object is solved by the method having the features of claim 1. Sub-claims are directed to preferable embodiments of the invention.
As a result of a thorough study being conducted for technology to suppress occurrence of uneven wear, the present inventors have found that occurrence of uneven wear can be suppressed by controlling a radial runout at an equator portion of a tread, that is, at a center portion, as well as a radial runout at each end portion of the tread, that is, at each shoulder portion, and the radial runout can be effectively controlled by defining not only a stretch at a center portion of a belt but also a stretch at each end portion of the belt when pressurizing and heating an uncured tire in a mold. Thus, the present inventors have completed the present invention.
A heavy duty pneumatic tire which is not claimed is a heavy duty pneumatic tire formed by vulcanizing and molding an uncured tire, the heavy duty pneumatic tire including: a tread that comes into contact with a road surface; and a belt located radially inward of the tread. The tread has a tread surface having a profile that is convex radially outward, the tread surface includes a crown portion including an equator of the tire, and a pair of side portions located outward of the crown portion in an axial direction, a profile of the crown portion is represented by a circular arc having a radius Rc, and a profile of each of the side portions is represented by a circular arc having a radius Rs. At least three circumferential grooves are formed on the tread, thereby forming at least four land portions aligned in the axial direction, and, among these land portions, a land portion located at an inner side in the axial direction is a center land portion, and a land portion located at an outer side in the axial direction is a shoulder land portion. The belt includes a plurality of layers stacked in a radial direction, and each of the layers incudes a large number of belt cords tilted relative to a circumferential direction. Among the plurality of layers, a layer having a largest width in the axial direction is a first reference layer, a layer stacked at an outer side of the first reference layer is a second reference layer, and a layer located at an innermost side in the radial direction is a third reference layer. A ratio of a center stretch Sc, at a center portion of the third reference layer, indicated by the following formula (2) to a shoulder stretch Ss, at an end portion of the third reference layer, indicated by the following formula (1) is not less than 1 and not greater than 3, and the shoulder stretch Ss is not less than 1%,

(shoulder stretch Ss)

$$100\times(Rsa-Rsb)/Rsb \quad (1),$$

(center stretch Sc)

$$100\times(Rca-Rcb)/Rcb \quad (2),$$

where Rsa is an inner diameter of the end portion of the third reference layer in the tire, Rsb is an inner diameter of the end portion of the third reference layer in the uncured tire, Rca is an inner diameter of the center portion of the third reference layer in the tire, and Rcb is an inner diameter of the center portion of the third reference layer in the uncured tire.

Preferably, in the not-claimed heavy duty pneumatic tire, the at least three circumferential grooves include a center circumferential groove located at the inner side in the axial direction, and a shoulder circumferential groove located at the outer side in the axial direction. The shoulder circumferential groove is narrower than the center circumferential groove.

Preferably, in the not-claimed heavy duty pneumatic tire, the shoulder stretch Ss is not greater than 2%.

Preferably, in the not-claimed heavy duty pneumatic tire, an overall value of a radial runout at the center portion of the tread is not greater than 1.5 mm, and an overall value of a radial runout at the shoulder portion of the tread is not greater than 1.5 mm.

Preferably, in the not-claimed heavy duty pneumatic tire, an absolute value of a difference between the overall value of the radial runout at the center portion and the overall value of the radial runout at the shoulder portion is not greater than 0.5 mm.

Preferably, in the not-claimed heavy duty pneumatic tire, the absolute value of the difference between the radial runout at the center portion and the radial runout at the shoulder portion at each portion in the circumferential direction of the tread is not greater than 0.20 mm.

Preferably, in the not-claimed heavy duty pneumatic tire, the shoulder land portion continuously extends in the circumferential direction without interruption.

Preferably, the not-claimed heavy duty pneumatic tire includes a narrow land portion located outward of the shoulder land portion in the axial direction and extending in the circumferential direction. A narrow circumferential groove is present between the narrow land portion and the shoulder land portion, and the narrow circumferential groove is located outward of an end of the first reference layer in the axial direction.

Preferably, in the not-claimed heavy duty pneumatic tire, a width in the axial direction of the first reference layer is equal to a width in the axial direction of the tread surface or smaller than the width in the axial direction of the tread surface.

Preferably, in the not-claimed heavy duty pneumatic tire, an actual width of the shoulder land portion is larger than an actual width of the center land portion.

Preferably, in the not-claimed heavy duty pneumatic tire, in at least one layer among the plurality of layers included in the belt, a tilt angle of each of the belt cords at a layer end portion is equal to a tilt angle of each of the belt cords at an equator plane.

Preferably, in the not-claimed heavy duty pneumatic tire, in the first reference layer and the second reference layer, the tilt angle of each of the belt cords at the equator plane is not less than 12° and not greater than 20°.

Preferably, in the not-claimed heavy duty pneumatic tire, a thickness of the tire measured along a line normal to an inner surface of the tire and passing through an end of the tread surface is larger than a thickness of the tire measured along the equator plane.

Preferably, in the not-claimed heavy duty pneumatic tire, the radius Rs of the circular arc representing the profile of each of the side portions is larger than the radius Rc of the circular arc representing the profile of the crown portion.

A manufacturing method of a heavy duty pneumatic tire according to an aspect of the present invention is a method for manufacturing a heavy duty pneumatic tire including a tread that comes into contact with a road surface and a belt located radially inward of the tread, using a vulcanizing apparatus including a mold for molding the tire, the method including:

(1) a step of preparing an uncured tire including the tread and the belt;

(2) a step of putting the uncured tire into the mold; and

(3) a step of expanding the uncured tire in diameter and pressurizing and heating the uncured tire in the mold.

The belt includes a plurality of layers stacked in a radial direction, and, among the plurality of layers, a layer having a largest width in an axial direction is a first reference layer, a layer stacked at an outer side of the first reference layer is a second reference layer, and a layer located at an innermost side in the radial direction is a third reference layer. A ratio of a center stretch Sc, at a center portion of the third reference layer, indicated by the following formula (2) to a shoulder stretch Ss, at an end portion of the third reference layer, indicated by the following formula (1) is not less than 1 and not greater than 3, and the shoulder stretch Ss is not less than 1%,

(shoulder stretch Ss)

$$100 \times (Rsa - Rsb)/Rsb \quad (1),$$

(center stretch Sc)

$$100 \times (Rca - Rcb)/Rcb \quad (2),$$

where Rsa is an inner diameter of the end portion of the third reference layer in the tire, Rsb is an inner diameter of the end portion of the third reference layer in the uncured tire, Rca is an inner diameter of the center portion of the third reference layer in the tire, and Rcb is an inner diameter of the center portion of the third reference layer in the uncured tire, and Rsa and Rca are measured in a state where the internal pressure of the tire is adjusted to 10% of the normal internal pressure, and no load is applied to the tire.

[ADVANTAGEOUS EFFECTS OF INVENTION]

In the heavy duty pneumatic tire manufactured according to the present invention, the stretch of the belt specified on the basis of the inner diameter of the belt in the uncured tire and the inner diameter of the belt in the tire obtained by pressurizing and heating the uncured tire is set in a predetermined range. Accordingly, in the tire, the radial runout at the center portion of the tread and the radial runout at the shoulder portion of the tread are adjusted in a well-balanced manner. In the tread of the tire, a portion (for example, an uneven portion) that may be a starting point of uneven wear is less likely to be formed. In the tire, occurrence of uneven wear is suppressed.

**BRIEF DESCRIPTION OF DRAWINGS**

FIG. 1 is a cross-sectional view showing a part of a heavy duty pneumatic tire manufactured according to an embodiment of the present invention.

FIG. 2 is a schematic diagram showing arrangement of belt cords included in a belt.

FIG. 3 is a development showing a tread surface of the tire in FIG. 1.

FIG. 4 is an explanatory diagram illustrating a profile of the tread surface of the tire.

FIG. 5 is a diagram illustrating a stretch of the belt during vulcanization and molding.

FIG. 6 is an enlarged cross-sectional view showing a part of the tire in FIG. 1.

**DESCRIPTION OF EMBODIMENTS**

The following will describe in detail the present invention based on preferred embodiments with appropriate reference to the drawings.

In the present invention, a state where a tire is mounted on a rim (normal rim), the internal pressure of the tire is adjusted to a normal internal pressure, and no load is applied to the tire is referred to as a normal state. In the present invention, unless otherwise specified, the dimensions and angles of the tire and each component of the tire are measured in the normal state.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

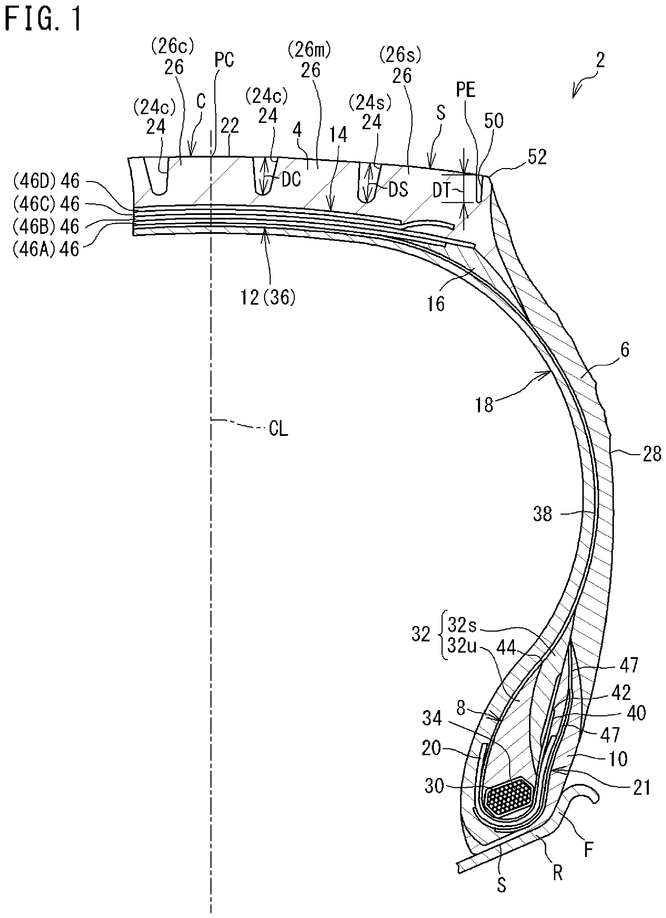

FIG. 1 shows a part of a heavy duty pneumatic tire 2 (hereinafter, sometimes referred to simply as "tire 2") manufactured according to an embodiment of the present invention. The tire 2 is mounted to a heavy duty vehicle such as a truck or a bus.

FIG. 1 shows a part of a cross-section of the tire 2 along a plane including the rotation axis of the tire 2. In FIG. 1, the right-left direction is the axial direction of the tire 2, and the up-down direction is the radial direction of the tire 2. The direction perpendicular to the surface of the sheet of FIG. 1 is the circumferential direction of the tire 2. In FIG. 1, an alternate long and short dash line CL represents the equator plane of the tire 2.

In FIG. 1, the tire 2 is mounted on a rim R. The rim R is a normal rim. The interior of the tire 2 is filled with air, and the internal pressure of the tire 2 is adjusted to a normal internal pressure. No load is applied to the tire 2.

The tire 2 includes a tread 4, a pair of sidewalls 6, a pair of beads 8, a pair of chafers 10, a carcass 12, a belt 14, a cushion layer 16, an inner liner 18, a pair of steel reinforcing layers 20, and a pair of fiber reinforcing layers 21.

The tread 4 is formed from a crosslinked rubber. The tread 4 comes into contact with a road surface at an outer surface 22 thereof. The outer surface 22 of the tread 4 is a tread surface. The tread 4 has the tread surface 22. In FIG. 1, reference character PC represents the point of intersection of the tread surface 22 and the equator plane. The point of intersection PC corresponds to the equator of the tire 2.

In the tire 2, at least three circumferential grooves 24 are formed on the tread 4. Accordingly, at least four land portions 26 are formed in the tread 4.

Each sidewall 6 is connected to an end of the tread 4. The sidewall 6 extends radially inward from the end of the tread 4. An outer surface 28 of the sidewall 6 forms a side surface of the tire 2. The sidewall 6 is formed from a crosslinked rubber.

Each bead 8 is located radially inward of the sidewall 6. The bead 8 includes a core 30 and an apex 32.

The core 30 extends in the circumferential direction. The core 30 includes a wound wire 34 made of steel. The core 30 has a substantially hexagonal cross-sectional shape. The apex 32 is located radially outward of the core 30. The apex 32 extends radially outward from the core 30. The apex 32 includes an inner apex 32u and an outer apex 32s. Each of the inner apex 32u and the outer apex 32s is formed from a crosslinked rubber. The outer apex 32s is more flexible than the inner apex 32u.

Each chafer 10 is located axially outward of the bead 8. The chafer 10 is located radially inward of the sidewall 6. The chafer 10 comes into contact with a seat S and a flange F of the rim R. The chafer 10 is formed from a crosslinked rubber.

The carcass 12 is located inward of the tread 4, each sidewall 6, and each chafer 10. The carcass 12 includes at least one carcass ply 36. The carcass 12 of the tire 2 is composed of one carcass ply 36.

The carcass ply 36 includes a large number of carcass cords aligned with each other, which are not shown. The carcass cords are covered with a topping rubber. Each carcass cord intersects the equator plane. In the tire 2, the angle of each carcass cord relative to the equator plane is not less than 70° and not greater than 90°. The carcass 12 of the tire 2 has a radial structure. In the tire 2, the material of the carcass cords is steel. A cord formed from an organic fiber may be used as each carcass cord.

In the tire 2, the carcass ply 36 is turned up around each core 30 from the inner side toward the outer side in the axial direction. The carcass ply 36 has: a main body portion 38 that extends on and between one core 30 and the other core 30; and a pair of turned-up portions 40 that are connected to the main body portion 38 and turned up around the respective cores 30 from the inner side toward the outer side in the axial direction. In the tire 2, an end 42 of each turned-up portion 40 is located inward of an outer end 44 of the inner apex 32u in the radial direction.

The belt 14 is located radially inward of the tread 4. The belt 14 is located radially outward of the carcass 12.

The belt 14 includes a plurality of layers 46 stacked in the radial direction. The belt 14 of the tire 2 includes four layers 46 including a first layer 46A, a second layer 46B, a third layer 46C, and a fourth layer 46D. In the tire 2, the number of layers 46 included in the belt 14 is not particularly limited. The configuration of the belt 14 is determined as appropriate in consideration of the specifications of the tire 2.

In the tire 2, among the four layers 46, the second layer 46B located between the first layer 46A and the third layer 46C has the largest width in the axial direction. The fourth layer 46D located at the outermost side in the radial direction has the smallest width in the axial direction. As shown in FIG. 1, the width in the axial direction of the third layer 46C is larger than the width in the axial direction of the first layer 46A. In the tire 2, ends of the first layer 46A, the second layer 46B, the third layer 46C, and the fourth layer 46D, which are included in the belt 14, are located outward of a shoulder circumferential groove described later, in the axial direction.

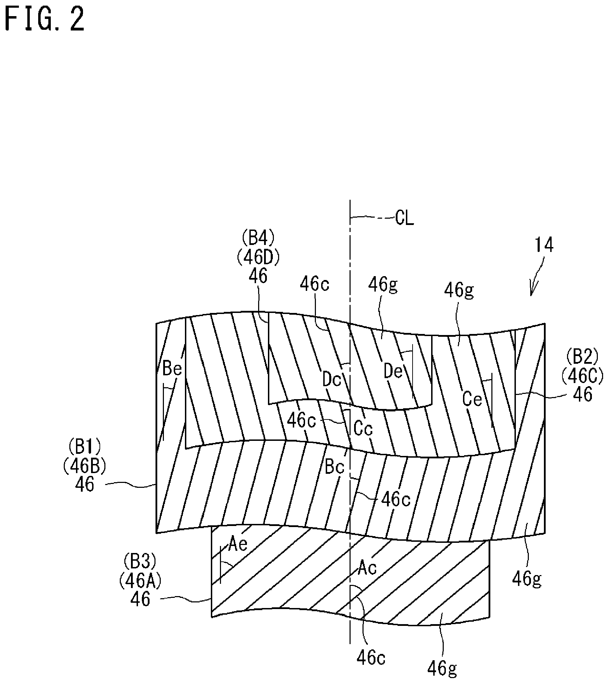

FIG. 2 shows the configuration of the belt 14 of the tire 2. In FIG. 2, the right-left direction is the axial direction of the tire 2, and the up-down direction is the circumferential direction of the tire 2.

Each of the layers 46, which are included in the belt 14, includes a large number of belt cords 46c aligned with each other. The number of belt cords 46c in each layer 46 is not less than 20 and not greater than 40 per a width of 50 mm of the layer 46 in a cross-section of the layer 46 along a plane perpendicular to the direction in which the belt cords 46c extend. The belt cords 46c are covered with a topping rubber 46g. In the tire 2, the material of the belt cords 46c is steel. The belt cords 46c are steel cords. In FIG. 2, for convenience of description, the belt cords 46c covered with the topping rubber 46g are represented by solid lines.

The belt cords 46c are tilted relative to the circumferential direction. In the tire 2, each of the layers 46, which are included in the belt 14, includes the large number of belt cords 46c tilted relative to the circumferential direction.

As shown in FIG. 2, the direction in which the belt cords 46c of the first layer 46A are tilted relative to the circumferential direction is the same as the direction in which the belt cords 46c of the second layer 46B are tilted relative to the circumferential direction. The direction in which the belt cords 46c of the second layer 46B are titled relative to the circumferential direction is opposite to the direction in which the belt cords 46c of the third layer 46C are titled relative to the circumferential direction. The direction in which the belt cords 46c of the third layer 46C are tilted relative to the circumferential direction is the same as the direction in which the belt cords 46c of the fourth layer 46D are titled relative to the circumferential direction. The direction in which the belt cords 46c of the first layer 46A are tilted relative to the circumferential direction may be opposite to the direction in which the belt cords 46c of the second layer 46B are titled relative to the circumferential direction, and the direction in which the belt cords 46c of the fourth layer 46D are titled relative to the circumferential direction may be opposite to the direction in which the belt cords 46c of the third layer 46C are tilted relative to the circumferential direction.

In the present invention, among a plurality of layers included in a belt, a layer having the largest width in the axial direction is a first reference layer, a layer stacked at the outer side of the first reference layer is a second reference layer, and a layer located at the innermost side in the radial direction is a third reference layer. As described above, in the tire 2, the belt 14 includes the first layer 46A, the second layer 46B, the third layer 46C, and the fourth layer 46D, which are stacked in the radial direction. In the tire 2, among these layers 46, the second layer 46B having the largest width in the axial direction is a first reference layer B1, and the third layer 46C stacked at the outer side of the second layer 46B in the radial direction is a second reference layer B2. The first layer 46A located at the innermost side in the radial direction is a third reference layer B3. The fourth layer 46D is a fourth reference layer B4.

Each cushion layer 16 is located between the belt 14 and the carcass 12 at an end portion of the belt 14. The cushion layer 16 is formed from a crosslinked rubber.

The inner liner 18 is located inward of the carcass 12. The inner liner 18 forms an inner surface of the tire 2. The inner liner 18 is formed from a crosslinked rubber that has an excellent air blocking property. The inner liner 18 maintains the internal pressure of the tire 2.

Each steel reinforcing layer 20 is located at a bead 8 portion. The steel reinforcing layer 20 is turned up around the core 30 along the carcass ply 36 from the inner side toward the outer side in the axial direction. In the tire 2, at least a part of the steel reinforcing layer 20 is in contact with the carcass ply 36. The steel reinforcing layer 20 includes a large number of filler cords aligned with each other, which are not shown. The material of the filler cords is steel.

Each fiber reinforcing layer 21 is located axially outward of the bead 8 and covers an end portion of an axially outer portion of the steel reinforcing layer 20. The fiber reinforcing layer 21 includes two plies 47. Each ply 47 includes a large number of fiber cords aligned with each other, which are not shown. In the fiber reinforcing layer 21, the fiber cords are covered with a topping rubber. The fiber cords are formed from an organic fiber. The organic fiber is preferably a nylon fiber.

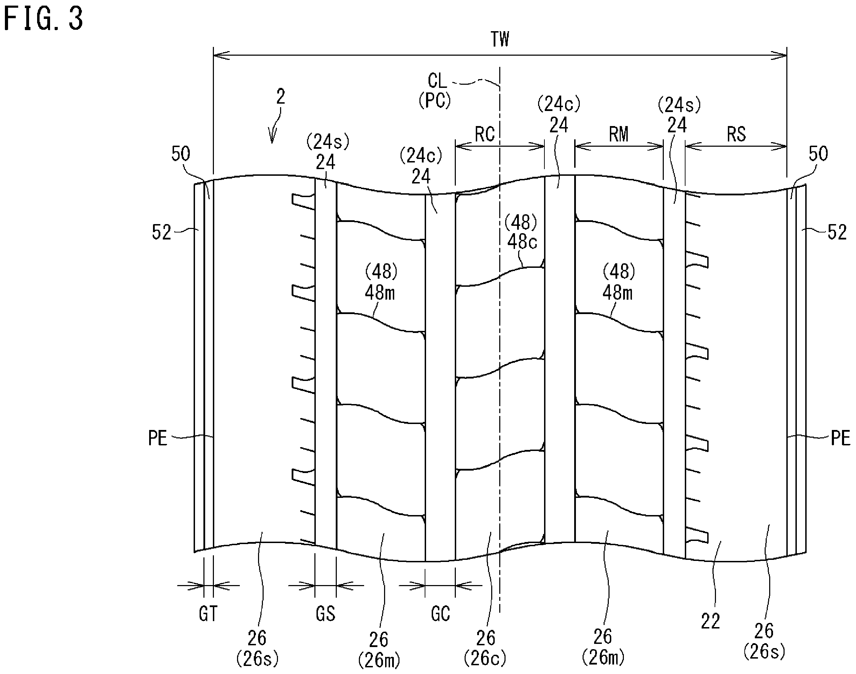

FIG. 3 shows a development of the tread surface 22. In FIG. 3, the right-left direction is the axial direction of the tire 2, and the up-down direction is the circumferential direction of the tire 2. The direction perpendicular to the surface of the sheet of FIG. 3 is the radial direction of the tire 2.

In FIG. 3, reference character PE represents each end of the tread surface 22. If each end PE of the tread surface 22 is indistinguishable from the appearance, each outer end in the axial direction of a ground-contact surface obtained by applying the normal load to the tire 2 in the normal state and bringing the tread 4 into contact with a flat surface at a camber angle of 0° is defined as an end PE of the tread surface 22.

In the tire 2, four circumferential grooves 24 are formed on the tread 4. These circumferential grooves 24 are aligned in the axial direction and continuously extend in the circumferential direction.

Among the four circumferential grooves 24, circumferential grooves 24c located at the inner side in the axial direction, that is, circumferential grooves 24c near an equator PC, are center circumferential grooves 24c. Circumferential grooves 24s located at the outer sides in the axial direction, that is, circumferential grooves 24s near the ends PE of the tread surface 22, are shoulder circumferential grooves 24s. In the case where the circumferential grooves 24 formed on the tread 4 include a circumferential groove 24 located on the equator PC, the circumferential groove 24 located on the equator PC is defined as a center circumferential groove. Furthermore, in the case where a circumferential groove 24 is present between the center circumferential groove 24c and the shoulder circumferential groove 24s, this circumferential groove 24 is defined as a middle circumferential groove.

In FIG. 3, a double-headed arrow TW represents the actual width of the tread. The actual width TW of the tread is represented as the distance, measured along the tread surface 22, from one end PE of the tread surface 22 to the other end PE of the tread surface 22. In FIG. 3, a double-headed arrow GC represents the actual width of the center circumferential groove 24c. A double-headed arrow GS represents the actual width of the shoulder circumferential groove 24s. The actual width GC and the actual width GS are measured along a virtual tread surface obtained by assuming that the circumferential grooves 24 are not present on the tread surface 22. In FIG. 1, a double-headed arrow DC represents the depth of the center circumferential groove 24c. A double-headed arrow DS represents the depth of the shoulder circumferential groove 24s.

In the tire 2, from the viewpoint of contribution to drainage performance and traction performance, the actual width GC of the center circumferential groove 24c is preferably about 2 to 10% of the actual width TW of the tread. The depth DC of the center circumferential groove 24c is preferably 13 to 25 mm.

In the tire 2, from the viewpoint of contribution to drainage performance and traction performance, the actual width GS of the shoulder circumferential groove 24s is preferably about 1 to 7% of the actual width TW of the tread. The depth DS of the shoulder circumferential groove 24s is preferably 13 to 25 mm.

As described above, in the tire 2, the four circumferential grooves 24 are formed on the tread 4. Accordingly, five land portions 26 are formed in the tread 4. These land portions 26 are aligned in the axial direction and extend in the circumferential direction.

Among the five land portions 26, a land portion 26c located at the inner side in the axial direction, that is, a land portion 26c located on the equator PC, is a center land portion 26c. Land portions 26s located at the outer sides in the axial direction, that is, land portions 26s including the ends PE of the tread surface 22, are shoulder land portions 26s. Furthermore, land portions 26m located between the center land portion 26c and the shoulder land portions 26s are middle land portions 26m. In the case where the land portion 26 located at the inner side in the axial direction, among the land portions 26 formed in the tread 4, is located not on the equator PC but near the equator PC, the land portion 26 located near the equator PC is defined as a center land portion.

In FIG. 3, a double-headed arrow RC represents the actual width of the center land portion 26c. A double-headed arrow RS represents the actual width of the shoulder land portion 26s. A double-headed arrow RM represents the actual width of the middle land portion 26m. The actual width RC, the actual width RS, and the actual width RM are measured along the tread surface 22.

In the tire 2, from the viewpoint of steering stability and wet performance, the actual width RC of the center land portion 26c is preferably about 10 to 18% of the actual width TW of the tread. From the same viewpoint, the actual width RM of the middle land portion 26m is preferably about 10 to 18% of the actual width TW of the tread.

As shown in FIG. 3, a plurality of sipes 48c are formed on the center land portion 26c of the tire 2 so as to traverse the center land portion 26c. On the center land portion 26c, these sipes 48c are located at intervals in the circumferential direction. The center land portion 26c intermittently extends in the circumferential direction. A plurality of sipes 48m are also formed on each middle land portion 26m so as to traverse the middle land portion 26m. These sipes 48m are located at intervals in the circumferential direction. Similar to the center land portion 26c, each middle land portion 26m also intermittently extends in the circumferential direction.

In the tire 2, the sipes 48c of the center land portion 26c and the sipes 48m of each middle land portion 26m contribute to improvement of wet performance. The widths of these sipes 48 are set in the range of 0.5 mm or greater and 1.5 mm or less. The depths of the sipes 48 are set in the range of 3 mm or greater and 12 mm or less.

In the tire 2, unlike the center land portion 26c and each middle land portion 26m, sipes or narrow grooves traversing each shoulder land portion 26s are not formed on each shoulder land portion 26s. Each shoulder land portion 26s continuously extends in the circumferential direction without interruption.

As shown in FIG. 1 and FIG. 3, in the tire 2, a narrow circumferential groove 50 may be formed at the axially outer side of each shoulder circumferential groove 24s so as to continuously extend in the circumferential direction. Accordingly, a narrow land portion 52 is formed at the axially outer side of each shoulder land portion 26s. The narrow land portion 52 continuously extends in the circumferential direction. The narrow land portion 52 suppresses an excessive rise in contact pressure at the end PE of the tread surface 22. The narrow land portion 52 suppresses occurrence of uneven wear. From this viewpoint, preferably, the tire 2 includes the narrow land portion 52 that is located outward of each shoulder land portion 26s in the axial direction and extends in the circumferential direction, and the narrow circumferential groove 50 is present between the narrow land portion 52 and the shoulder land portion 26s. In this case, the width of the narrow land portion 52 is normally set in the range of 3 mm or greater and 7 mm or less. A portion including the tread 4, the narrow circumferential groove 50, and the narrow land portion 52 forms a tread portion. By forming the narrow circumferential groove 50 on each end portion of the tread portion, the tread 4 and the narrow land portions 52 located axially outward of the tread 4 are formed.

In FIG. 1, a double-headed arrow DT represents the depth of the narrow circumferential groove 50. In FIG. 3, a double-headed arrow GT represents the actual width of the narrow circumferential groove 50. In the tire 2, the actual width GT of the narrow circumferential groove 50 is set so as to be not greater than 30% of the actual width GS of the shoulder circumferential groove 24s. The depth DT of the narrow circumferential groove 50 is set in the range of not less than 0.6 times and not greater than 1.0 times the depth DS of the shoulder circumferential groove 24s.

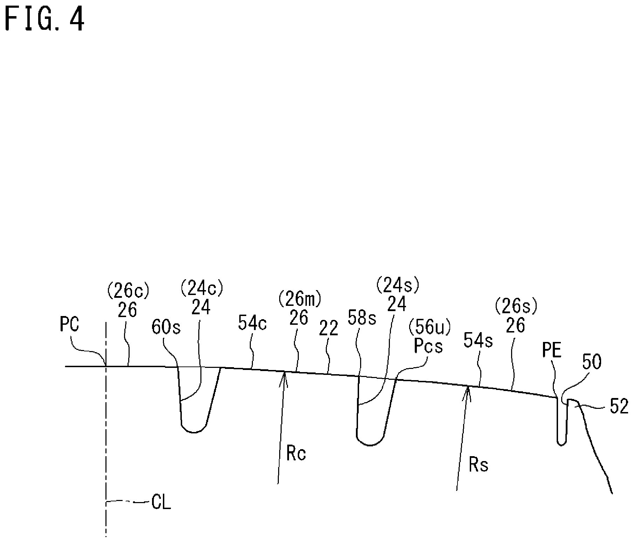

FIG. 4 shows a part of a profile of the tread surface 22 of the tire 2. In FIG. 4, the right-left direction is the axial direction of the tire 2, and the up-down direction is the radial direction of the tire 2. The direction perpendicular to the surface of the sheet of FIG. 4 is the circumferential direction of the tire 2.

The profile is specified on a cross-section, along a plane including a rotation axis, of the tire 2 in a state (hereinafter, also referred to as a reference state) where: the tire 2 is mounted on the rim R (that is, normal rim); the internal pressure of the tire 2 is adjusted to 10% of the normal internal pressure; and no load is applied to the tire 2. The profile in the reference state corresponds to a profile of the cavity face of a mold described later.

The tread surface 22 has a profile that is convex radially outward. The profile of the tread surface 22 is symmetrical about the equator plane. The tread surface 22 of the tire 2 is divided into at least three zones in the axial direction. The tread surface 22 includes a crown portion 54c and a pair of side portions 54s.

The crown portion 54c is located at the center in the axial direction. The crown portion 54c includes the equator PC. In the tire 2, a profile of the crown portion 54c is represented by a circular arc having a radius Rc. Although not shown, the center of the circular arc is located on the equator plane.

Each side portion 54s is located outward of the crown portion 54c in the axial direction. The side portion 54s includes the end PE of the tread surface 22. In the tire 2, a profile of the side portion 54s is represented by a circular arc having a radius Rs.

In FIG. 4, reference character Pcs represents the boundary between the crown portion 54c and the side portion 54s. The circular arc (hereinafter, also referred to as crown circular arc) representing the profile of the crown portion 54c is tangent to the circular arc (hereinafter, also referred to as side circular arc) representing the profile of the side portion 54s, at the boundary Pcs.

In the tire 2, the boundary Pcs coincides with an inner edge 56u of the shoulder land portion 26s. The profile of the tread surface 22 may be formed such that the boundary Pcs coincides with an outer edge 58s of the middle land portion 26m, or the profile of the tread surface 22 may be formed such that the boundary Pcs is located between the inner edge 56u of the shoulder land portion 26s and the outer edge 58s of the middle land portion 26m. The profile of the tread surface 22 may be formed such that the boundary Pcs is located on the outer surface of the middle land portion 26m, or the profile of the tread surface 22 may be formed such that the boundary Pcs is located on the outer surface of the shoulder land portion 26s.

In the tire 2, the radius Rc of the circular arc representing the profile of the crown portion 54c is specified as follows. First, a virtual circular arc (hereinafter, also referred to as a first virtual circular arc) that has a center on the equator plane and passes through one outer edge 60s of the center land portion 26c, and the other outer edge 60s (not shown) of the center land portion 26c, is drawn. Between the one outer edge 60s of the center land portion 26c and the other outer edge 60s of the center land portion 26c, the deviation between the trajectory represented by the first virtual circular arc and the profile of the crown portion 54c is measured along a line normal to the first virtual circular arc. When this deviation is within 3% of the length of a line segment connecting the one outer edge 60s of the center land portion 26c and the other outer edge 60s of the center land portion 26c, the radius of the first virtual circular arc is specified as the radius Rc of the circular arc representing the profile of the crown portion 54c. In the case where a groove is present between the one outer edge 60s of the center land portion 26c and the other outer edge 60s of the center land portion 26c, a virtual profile obtained by assuming that this groove is not present is used as the profile of the crown portion 54c.

In the tire 2, the radius Rs of the circular arc representing the profile of the side portion 54s is specified as follows. First, the boundary Pcs is specified by using the above-described first virtual circular arc. Specifically, an end of the tangent line between the profile of the tread surface 22 and the first virtual circular arc, or the point of intersection of the profile of the tread surface 22 and the first virtual circular arc is specified as the boundary Pcs. Next, another virtual circular arc (hereinafter, also referred to as a second virtual circular arc) that has a center (not shown) on a straight line passing through the boundary Pcs and the center of the first virtual circular arc and passes through the boundary Pcs and the end PE of the tread surface 22, is drawn. Between the boundary Pcs and the end PE of the tread surface 22, the deviation between the trajectory represented by the second virtual circular arc and the profile of the side portion 54s is measured along a line normal to the second virtual circular arc. When this deviation is within 3% of the length of a line segment connecting the boundary Pcs and the end PE of the tread surface 22, the radius of the second virtual circular arc is specified as the radius Rs of the circular arc representing the profile of the side portion 54s. In the case where a groove is present between the boundary Pcs and the end PE of the tread surface 22, a virtual profile obtained by assuming that this groove is not present is used as the profile of the side portion 54s.

The following will describe a method for manufacturing the tire 2. In the method for manufacturing the tire 2, preforms for components of the tire 2 such as the tread 4 and the sidewalls 6 are prepared. For example, for the tread 4, a tread sheet is prepared as a preform for the tread 4 by processing a rubber composition for the tread 4 into a sheet and cutting the sheet into a predetermined length. For each of the layers 46 which are included in the belt 14, a belt sheet is prepared as a preform for the layer 46 by interposing the aligned belt cords 46c between two topping sheets to prepare a mother sheet and then cutting the mother sheet obliquely with respect to the longitudinal direction thereof.

In the method for manufacturing the tire 2, the preforms for the components of the tire 2 are assembled on a shaping machine that is not shown. For example, a carcass sheet as a preform for the carcass ply 36 is processed into a tubular shape to obtain the carcass ply 36, and the belt sheet is then wound on the tubular carcass sheet at a position at which the belt 14 is to be formed. One end portion and another end portion of the belt sheet are joined together to obtain the layer 46. Four belt sheets are wound to form the belt 14, and the tread sheet is then wound on the belt 14. One end portion and another end portion of the tread sheet are joined together to obtain the tread 4. The tire 2 in an uncrosslinked state, that is, an uncured tire 2r, is obtained by combining the preforms as described above. The method for manufacturing the tire 2 includes a step of preparing the uncured tire 2r including the tread 4 and the belt 14.

In the method for manufacturing the tire 2, the uncured tire 2r is put into a mold that is set at a predetermined temperature. A bladder that is expanded by being filled with a heating medium presses the uncured tire 2r against the cavity face of the mold from the inside. The uncured tire 2r is pressurized and heated in the mold for a predetermined time period. Accordingly, the rubber composition of the uncured tire 2r becomes crosslinked to obtain the tire 2. The tire 2 is formed by vulcanizing and molding the uncured tire 2r. The tire 2 is a vulcanized-molded product of the uncured tire 2r.

As described above, the uncured tire 2r put into the mold is pressed against the mold by the expanded bladder from the inside thereof. At this time, the uncured tire 2r is expanded in diameter and stretched in the circumferential direction. That is, the tire 2 is formed by putting the uncured tire 2r into the mold, and expanding the uncured tire 2r in diameter and pressurizing and heating the uncured tire 2r in the mold. The method for manufacturing the tire 2 includes a step of putting the uncured tire 2r into the mold, and a step of expanding the uncured tire 2r in diameter and pressurizing and heating the uncured tire 2r in the mold.

The belt 14 of the tire 2 is stretched when the uncured tire 2r is expanded in diameter. In the tire 2, a stretch of the belt 14, specifically, a stretch of the belt 14 at each end portion of the belt 14 (hereinafter, also referred to as belt end portion) and a stretch of the belt 14 at a center portion of the belt 14 (hereinafter, also referred to as belt center portion), are specified on the basis of the inner diameter of the belt 14 in the uncured tire 2r and the inner diameter of the belt 14 in the tire 2 obtained by pressurizing and heating the uncured tire 2r. In the present invention, the stretch of the belt 14 is specified on the basis of the first layer 46A located at the innermost side in the radial direction among the layers 46, which are included in the belt 14, that is, the third reference layer B3.

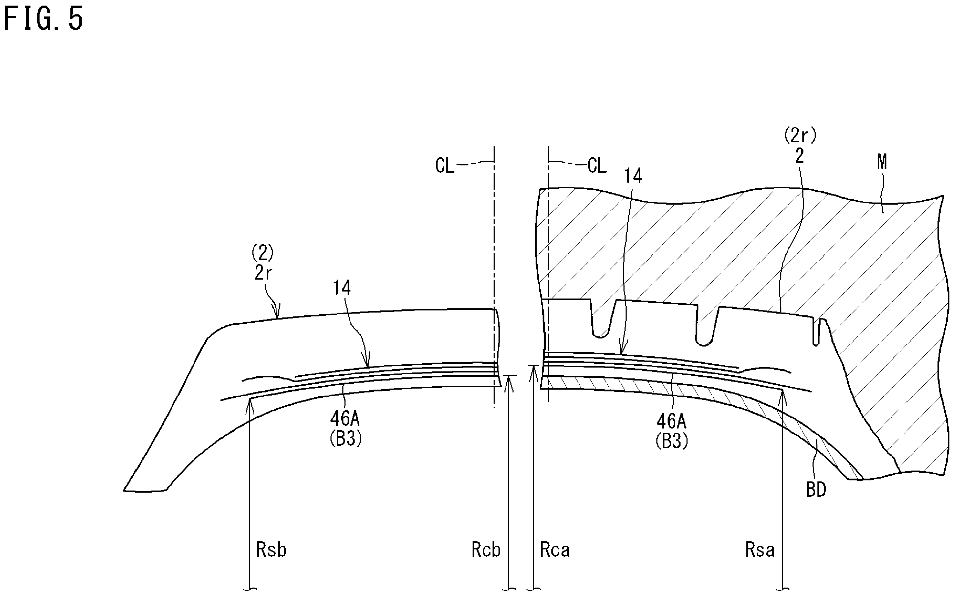

The left side of FIG. 5 shows the state of the belt 14 in the tire 2 in an uncrosslinked state before the tire 2 is put into the mold, that is, in the uncured tire 2r. The right side of FIG. 5 shows the state of the belt 14, in a mold M, of the tire 2 obtained by pressurizing and heating the uncured tire 2r. A member represented by reference character BD is the expanded bladder. The state of the tire 2 at the right side corresponds to a state where: the tire 2 is mounted on the rim R (normal rim); the internal pressure of the tire 2 is adjusted to 10% of the normal internal pressure; and no load is applied to the tire 2.

In FIG. 5, an arrow indicated by reference character Rcb represents the inner diameter of a center portion of the third reference layer B3 in the uncured tire 2r. The inner diameter Rcb is represented as the distance in the radial direction from the central axis (not shown) of the uncured tire 2r to the inner circumferential surface of the third reference layer B3 at the equator plane of the uncured tire 2r. An arrow indicated by reference character Rsb represents the inner diameter of an end portion of the third reference layer B3 in the uncured tire 2r. The inner diameter Rsb is represented as the distance in the radial direction from the central axis of the uncured tire 2r to the inner circumferential surface of the third reference layer B3 at an end of the third reference layer B3 of the uncured tire 2r.

In FIG. 5, an arrow indicated by reference character Rca represents the inner diameter of the center portion of the third reference layer B3 in the tire 2. The inner diameter Rca is represented as the distance in the radial direction from the central axis of the tire 2 to the inner circumferential surface of the third reference layer B3 at the equator plane of the tire 2. An arrow indicated by reference character Rsa represents the inner diameter of an end portion of the third reference layer B3 in the tire 2. The inner diameter Rsa is represented as the distance in the radial direction from the central axis of the tire 2 to the inner circumferential surface of the third reference layer B3 at the end of the third reference layer B3 of the tire 2.

In the present invention, the stretch of the belt 14 at the end portion of the third reference layer B3, that is, a shoulder stretch Ss, is indicated by the following formula (1). The shoulder stretch Ss is an index for the stretch of the belt 14 at the belt end portion.

(Shoulder stretch)

$$100 \times (Rsa - Rsb)/Rsb \quad (1)$$

The stretch of the belt 14 at the center portion of the third reference layer B3, that is, a center stretch Sc, is indicated by the following formula (2). The center stretch Sc is an index for the stretch of the belt 14 at the belt center portion. (Center stretch)

$$100 \times (Rca - Rcb)/Rcb \quad (2)$$

There is a radial runout (hereinafter, also referred to as RRO) which is an index representing vertical deviation of the tire 2. In the present invention, by measuring the RRO, a state of occurrence of a portion (for example, an uneven portion) that may be a starting point of occurrence of uneven wear is grasped.

In the tire 2, as described later, in order to suppress occurrence of uneven wear, an RRO at an equator portion of the tread 4, that is, at a center portion C, and an RRO at each end portion of the tread 4, that is, at a shoulder portion S are controlled by defining a stretch at the belt center portion and a stretch at the belt end portion when the uncured tire 2r is pressurized and heated in the mold M.

In the present invention, as the RRO at the center portion C, an RRO is measured at the center in the axial direction of the center land portion 26c (the equator PC in the tire 2), specifically in a range of ±10 mm from this center. As the RRO at the shoulder portion S, an RRO is measured at the center in the axial direction of the shoulder land portion 26s, specifically in a range of ±10 mm from this center. This RRO measurement is performed using a uniformity testing machine according to the test conditions in "Test procedures for automobile tire uniformity" of JASO C607: 2000.

In the tire 2, the ratio of the center stretch Sc indicated by the above-described formula (2) to the shoulder stretch Ss indicated by the above-described formula (1) is not less than 1 and not greater than 3.

In the tire 2, when the ratio of the center stretch Sc to the shoulder stretch Ss is set to be not less than 1, the belt 14 is sufficiently stretched during vulcanization and molding. Thus, in the tire 2, a small RRO is obtained at each of the center portion C and the shoulder portion S. In the tire 2, a portion (for example, an uneven portion) that may be a starting point of uneven wear (for example, shoulder wear of the shoulder land portion 26s) is less likely to be formed in the tread 4. When this ratio is set to be not greater than 3, the tire 2, in which the absolute value of the difference between the overall value of the RRO at the center portion C and the overall value of the RRO at the shoulder portion S is small, is obtained. In this case as well, a starting point of uneven wear is less likely to be formed in the tread 4.

Furthermore, in the tire 2, the shoulder stretch Ss is not less than 1%. Accordingly, the belt end portion is sufficiently stretched. In the tire 2, the RRO at the belt end portion is reduced to be small. Therefore, even in an inflated state of the tire 2, the RRO at the shoulder portion S of the tread 4 is reduced to be small. In the tire 2, a starting point of uneven wear is less likely to be formed in the tread 4. From this viewpoint, the shoulder stretch Ss is preferably not less than 1.3%.

In the tire 2, the ratio of the center stretch Sc to the shoulder stretch Ss is not less than 1 and not greater than 3, and the shoulder stretch Ss is not less than 1%. Accordingly, in the tire 2, the RRO at the center portion C of the tread 4 and the RRO at the shoulder portion S of the tread 4 are adjusted in a well-balanced manner. In the tire 2, a starting point of wear is less likely to be formed in the tread 4. In the tire 2, occurrence of uneven wear is suppressed.

In the tire 2, the shoulder stretch Ss is preferably not greater than 2.5%. Accordingly, in the tire 2, the belt end portion is appropriately stretched, and, during the stretch, flow of rubber is controlled such that the rubber uniformly flows in the circumferential direction. In the tire 2, a small RRO is obtained at the shoulder portion S. In the tire 2, a starting point of uneven wear is less likely to be formed in the tread 4. From this viewpoint, the shoulder stretch Ss is more preferably not greater than 2%.

In the tire 2, the center stretch Sc is preferably not less than 2%. Accordingly, the belt center portion is sufficiently stretched. In the tire 2, the RRO at the belt center portion is reduced to be small. Therefore, even in an inflated state of the tire 2, the RRO at the center portion C of the tread 4 is reduced to be small. In the tire 2, a starting point of uneven wear is less likely to be formed in the tread 4. From this viewpoint, the center stretch Sc is more preferably not less than 2.5%.

In the tire 2, the center stretch Sc is preferably not greater than 3.5%. Accordingly, in the tire 2, the center portion of the belt 14 is appropriately stretched, and, during the stretch, flow of rubber is controlled such that the rubber uniformly flows in the circumferential direction. In the tire 2, a small RRO is obtained at the center portion C. In the tire 2, a starting point of uneven wear is less likely to be formed in the tread 4.

In the tire 2, from the viewpoint of effectively suppressing occurrence of uneven wear, more preferably, the center stretch Sc is not less than 2%, and the shoulder stretch Ss is not less than 1%. In the tire 2, further preferably, the center stretch Sc is not less than 2.5% and not greater than 3.5%, and the shoulder stretch Ss is not less than 1.3% and not greater than 2.5%. In the tire 2, particularly preferably, the center stretch Sc is not less than 2.5% and not greater than 3.5%, and the shoulder stretch Ss is not less than 1.3% and not greater than 2.0%.

As described above, each of the layers 46, which are included in the belt 14, is obtained by winding the belt sheet on the tubular carcass sheet and joining one end portion and another end portion of the belt sheet. In the layer 46, a joined portion of the belt sheet is present. In the stretch of the belt 14 during vulcanization and molding, the joined portion is also stretched. As described above, in the tire 2, the RRO is controlled by the stretch of the belt 14. However, the speed of the stretch, the flexibility of rubber during the stretch, etc., affect flow of the rubber, and thus the RRO is also preferably in a predetermined range in order to effectively suppress occurrence of uneven wear.

In the tire 2, preferably, the overall value of the RRO at the center portion C of the tread 4 is not greater than 1.5 mm, and the overall value of the RRO at the shoulder portion S of the tread 4 is not greater than 1.5 mm. Accordingly, the roundness of the tire 2 is improved, and thus formation of a starting point of uneven wear is suppressed. In the tire 2, occurrence of uneven wear is effectively suppressed.

In the tire 2, the absolute value of the difference between the overall value of the RRO at the center portion C and the overall value of the RRO at the shoulder portion S is preferably not greater than 0.5 mm. Accordingly, the camber amount of the tire 2 is appropriately maintained, and thus the difference between the ground-contact length of the center portion C and the ground-contact length of the shoulder portion S is reduced. Slipping of the shoulder portion S, that is, the shoulder land portion 26s, on a road surface is suppressed, and thus occurrence of uneven wear is effectively suppressed in the tire 2.

In the tire 2, the absolute value of the difference between the RRO at the center portion C and the RRO at the shoulder portion S at each portion in the circumferential direction of the tread 4 is preferably not greater than 0.20 mm. Accordingly, at each portion in the circumferential direction of the tread 4, the RRO at the center portion C and the RRO at the shoulder portion S are linked to each other, and thus occurrence of variations in the degree of slipping of the shoulder land portion 26s on a road surface is suppressed. In the tire 2, occurrence of uneven wear is effectively suppressed. The absolute value of the difference between the RRO at the center portion C and the RRO at the shoulder portion S at each portion in the circumferential direction of the tread 4 is calculated on the basis of an RRO at the center portion C and an RRO at the shoulder portion S that are specified on a cross-section of the tire 2 along a plane including the central axis of the tire 2. In addition, each portion in the circumferential direction of the tread 4 means each of positions (eight inspection positions in total) on the tread surface 22 that are specified at intervals of 45° around the central axis of the tire 2.

As described above, in the tire 2, at least three circumferential grooves 24 are formed on the tread 4 so as to continuously extend in the circumferential direction, and these circumferential grooves 24 include the center circumferential grooves 24c located at the inner side in the axial direction, and the shoulder circumferential grooves 24s located at the outer sides in the axial direction.

In the tire 2, each shoulder circumferential groove 24s is preferably narrower than each center circumferential groove 24c. Accordingly, the actual width RS of the shoulder land portion 26s is sufficiently ensured. The shoulder land portion 26s has appropriate stiffness, and thus wear is less likely to occur in the shoulder land portion 26s. In the tire 2, uneven wear (for example, uneven wear in which the entirety of the shoulder land portion 26s is worn) is effectively suppressed. From this viewpoint, the ratio of the actual width GS of the shoulder circumferential groove 24s to the actual width GC of the center circumferential groove 24c is preferably not greater than 0.9. From the viewpoint of maintaining good drainage performance, this ratio is preferably not less than 0.7.

As described above, in the tire 2, at least four land portions 26 are formed in the tread 4 by forming at least three circumferential grooves 24 on the tread 4, and these land portions 26 include the center land portion 26c located at the inner side in the axial direction, and the shoulder land portions 26s located at the outer side in the axial direction.

In the tire 2, preferably, the actual width RS of the shoulder land portion 26s is larger than the actual width RC of the center land portion 26c. In the tire 2, the stiffness of the shoulder land portion 26s is sufficiently ensured. Since the shoulder land portion 26s has appropriate stiffness, wear is less likely to occur in the shoulder land portion 26s. In the tire 2, uneven wear (for example, uneven wear in which the entirety of the shoulder land portion 26s is worn) is effectively suppressed.

In the tire 2, the ratio of the width RS of the shoulder land portion 26s to the width RC of the center land portion 26c is preferably not less than 1.15 and preferably not greater than 1.45. When this ratio is set to be not less than 1.15, the stiffness of the shoulder land portion 26s is sufficiently ensured. Since the shoulder land portion 26s has appropriate stiffness, wear is less likely to occur in the shoulder land portion 26s. In the tire 2, uneven wear (for example, uneven wear in which the entirety of the shoulder land portion 26s is worn) is effectively suppressed. From this viewpoint, this ratio is more preferably not less than 1.20. When this ratio is set to be not greater than 1.45, the circumferential length difference in the shoulder land portion 26s is appropriately maintained. In the tire 2, a difference in slipping of each portion of the shoulder land portion 26s on a road surface is less likely to be made, and thus occurrence of shoulder wear in the shoulder land portion 26s is suppressed. In this case as well, in the tire 2, occurrence of uneven wear is effectively suppressed. From this viewpoint, this ratio is more preferably not greater than 1.40.

In the tire 2, the ratio of the actual width RM of the middle land portion 26m to the actual width RC of the center land portion 26c is preferably not less than 0.95 and preferably not greater than 1.05. When this ratio is set to be not less than 0.95, the actual width RS of the shoulder land portion 26s is appropriately ensured, and thus the circumferential length difference in the shoulder land portion 26s is appropriately maintained. In the tire 2, a difference in slipping of each portion of the shoulder land portion 26s on a road surface is less likely to be made, and thus occurrence of shoulder wear in the shoulder land portion 26s is suppressed. In the tire 2, occurrence of uneven wear is effectively suppressed. When this ratio is set to be not greater than 1.05, the actual width RS of the shoulder land portion 26s is ensured, and the shoulder land portion 26s has sufficient stiffness. Since wear is less likely to occur in the shoulder land portion 26s, uneven wear (for example, uneven wear in which the entirety of the shoulder land portion 26s is worn) is effectively suppressed in the tire 2.

As described above, in the tire 2, the ratio of the center stretch Sc to the shoulder stretch Ss is not less than 1 and not greater than 3, and the shoulder stretch Ss is not less than 1%. In the tire 2, the degrees of stretch at the end portion and the center portion of the belt 14 are adjusted in a well-balanced manner. This stretch control effectively suppresses disruption of the arrangement of the belt cords 46c in each of the layers 46, which are included in the belt 14.

In FIG. 2, an angle Bc is the tilt angle of each belt cord 46c included in the second layer 46B, that is, in the first reference layer B1, relative to the circumferential direction at the equator plane. An angle Be is the tilt angle of each belt cord 46c included in the first reference layer B1 relative to the circumferential direction at a layer end portion. An angle Cc is the tilt angle of each belt cord 46c included in the third layer 46C, that is, in the second reference layer B2, relative to the circumferential direction at the equator plane. An angle Ce is the tilt angle of each belt cord 46c included in the second reference layer B2 relative to the circumferential direction at a layer end portion. An angle Ac is the tilt angle of each belt cord 46c included in the first layer 46A, that is, in the third reference layer B3, relative to the circumferential direction at the equator plane. An angle Ae is the tilt angle of each belt cord 46c included in the third reference layer B3 relative to the circumferential direction at a layer end portion. An angle Dc is the tilt angle of each belt cord 46c included in the fourth layer 46D, that is, in the fourth reference layer B4, relative to the circumferential direction at the equator plane. An angle De is the tilt angle of each belt cord 46c included in the fourth reference layer B4 relative to the circumferential direction at a layer end portion. The tilt angle of each belt cord 46c at the equator plane is represented as the tilt angle of each belt cord 46c located in a range with a width of 10 mm having a center at the equator plane. The tilt angle of each belt cord 46c at the layer end portion is represented as the tilt angle of each belt cord 46c located in a range of 10 mm inward from an end of each layer.

In the tire 2, in the first reference layer B1, the tilt angle Be of each belt cord 46c at the layer end portion is preferably equal to the tilt angle Bc of each belt cord 46c at the equator plane. In other words, the difference (Be-Bc) between the tilt angle Be of each belt cord 46c at the layer end portion and the tilt angle Bc of each belt cord 46c at the equator plane is preferably not less than -0.4° and not greater than 0.4°. In the tire 2, the first reference layer B1 in which the difference (Be-Bc) has conventionally been not less than 2° and in which the stiffness has conventionally tended to decrease at the end portion, has substantially uniform stiffness in the axial direction. A decrease in stiffness at the end portion is suppressed, and uneven holding force by the first reference layer B1 is less likely to occur, so that the belt 14 including the first reference layer B1 contributes to suppression of uneven wear. In the tire 2, uneven wear is less likely to occur.

In the tire 2, in the second reference layer B2, the tilt angle Ce of each belt cord 46c at the layer end portion is preferably equal to the tilt angle Cc of each belt cord 46c at the equator plane. In other words, the difference (Ce-Cc) between the tilt angle Ce of each belt cord 46c at the layer end portion and the tilt angle Cc of each belt cord 46c at the equator plane is preferably not less than -0.4° and not greater than 0.4°. In the tire 2, the second reference layer B2 in which the difference (Ce-Cc) has conventionally been not less than 2° and in which the stiffness has conventionally tended to decrease at the end portion, has substantially uniform stiffness in the axial direction. A decrease in stiffness at the end portion is suppressed, and uneven holding force by the second reference layer B2 is less likely to occur, so that the belt 14 including the second reference layer B2 contributes to suppression of uneven wear. In the tire 2, uneven wear is less likely to occur.

In the tire 2, in the third reference layer B3, the tilt angle Ae of each belt cord 46c at the layer end portion is preferably equal to the tilt angle Ac of each belt cord 46c at the equator plane. In other words, the difference (Ae-Ac) between the tilt angle Ae of each belt cord 46c at the layer end portion and the tilt angle Ac of each belt cord 46c at the equator plane is preferably not less than -0.4° and not greater than 0.4°. In the tire 2, the third reference layer B3 in which the difference (Ae-Ac) has conventionally been not less than 2° and in which the stiffness has conventionally tended to decrease at the end portion, has substantially uniform stiffness in the axial direction. A decrease in stiffness at the end portion is suppressed, and uneven holding force by the third reference layer B3 is less likely to occur, so that the belt 14 including the third reference layer B3 contributes to suppression of uneven wear. In the tire 2, uneven wear is less likely to occur.

In the tire 2, in the fourth reference layer B4, the tilt angle De of each belt cord 46c at the layer end portion is preferably equal to the tilt angle Dc of each belt cord 46c at the equator plane. In other words, the difference (De-Dc) between the tilt angle De of each belt cord 46c at the layer end portion and the tilt angle Dc of each belt cord 46c at the equator plane is preferably not less than -0.4° and not greater than 0.4°. In the tire 2, the fourth reference layer B4 in which the difference (De-Dc) has conventionally been not less than 2° and in which the stiffness has conventionally tended to decrease at the end portion, has substantially uniform stiffness in the axial direction. A decrease in stiffness at the end portion is suppressed, and uneven holding force by the fourth reference layer B4 is less likely to occur, so that the belt 14 including the fourth reference layer B4 contributes to suppression of uneven wear. In the tire 2, uneven wear is less likely to occur.

In the tire 2, from the viewpoint of effectively suppressing occurrence of uneven wear, in at least the first reference layer B1 among the layers 46 which are included in the belt 14, the tilt angle of each belt cord 46c at the layer end portion and the tilt angle of each belt cord 46c at the equator plane are preferably equal to each other. In the first reference layer B1 and the second reference layer B2 among the layers 46 which are included in the belt 14, the tilt angle of each belt cord 46c at the layer end portion and the tilt angle of each belt cord 46c at the equator plane are more preferably equal to each other. In all the layers 46 which are included in the belt 14, the tilt angle of each belt cord 46c at the layer end portion and the tilt angle of each belt cord 46c at the equator plane are further preferably equal to each other.

In the tire 2, in the first reference layer B1, the tilt angle Bc of each belt cord 46c at the equator plane is preferably not less than 12° and not greater than 20°. The tilt angle Bc is smaller than that in the belt of a conventional tire. The holding force of the belt including the first reference layer B1 is higher than that of the conventional belt. The belt 14 contributes to suppression of uneven wear. From this viewpoint, the tilt angle Bc is preferably not less than 14° and preferably not greater than 18°.

In the tire 2, in the second reference layer B2, the tilt angle Cc of each belt cord 46c at the equator plane is preferably not less than 12° and not greater than 20°. The tilt angle Cc is smaller than that in the belt of a conventional tire. The holding force of the belt including the second reference layer B2 is higher than that of the conventional belt. The belt 14 contributes to suppression of uneven wear. From this viewpoint, the tilt angle Cc is preferably not less than 14° and preferably not greater than 18°.

In the tire 2, in order to appropriately maintain the stiffness of the belt 14, the tilt angle Ac of each belt cord 46c of the third reference layer B3 and the tilt angle Dc of each belt cord 46c of the fourth reference layer B4 at the equator plane are set to angles larger than the tilt angle Bc of each belt cord 46c of the first reference layer B1 and the tilt angle Cc of each belt cord 46c of the second reference layer B2. Specifically, the tilt angle Ac of each belt cord 46c of the third reference layer B3 at the equator plane is preferably not less than 50° and preferably not greater than 70°. The tilt angle Dc of each belt cord 46c of the fourth reference layer B4 at the equator plane is preferably not less than 15° and preferably not greater than 35°.

In the tire 2, each of the layers 46 which are included in the belt 14 is preferably formed such that the density of the belt cords 46c at the equator plane and the density of the belt cords 46c at the layer end portion are equal to each other. In the tire 2, the belt 14 in which the density at the end portion has conventionally been decreased and in which the stiffness has conventionally tended to decrease at the end portion, has substantially uniform stiffness in the axial direction. Uneven holding force by the belt 14 is less likely to occur, so that the belt 14 contributes to suppression of uneven wear. In the tire 2, uneven wear is less likely to occur. The density of the belt cords 46c is represented by the number of belt cords 46c present per a length of 50 mm of each layer in the circumferential direction.

In the tire 2, from the viewpoint of effectively suppressing occurrence of uneven wear, at least the first reference layer B1 among the layers 46 which are included in the belt 14 is preferably formed such that the density of the belt cords 46c at the equator plane and the density of the belt cords 46c at the layer end portion are equal to each other. The first reference layer B1 and the second reference layer B2 among the layers 46 which are included in the belt 14 are more preferably formed such that the density of the belt cords 46c at the equator plane and the density of the belt cords 46c at the layer end portion are equal to each other. All the layers 46 which are included in the belt 14 are further preferably formed such that the density of the belt cords 46c at the equator plane and the density of the belt cords 46c at the layer end portion are equal to each other.

In the tire 2, the tread surface 22 includes the crown portion 54c having the profile represented by the circular arc having the radius Rc, and the side portions 54s each having the profile represented by the circular arc having the radius Rs. In the tire 2, the radius Rs of the circular arc representing the profile of each side portion 54s is preferably larger than the radius Rc of the circular arc representing the profile of the crown portion 54c. In the tire 2, regarding the circumferential length of the tire 2, the circumferential length difference between the circumferential length of the equator portion and the circumferential length of a portion at the end PE of the tread surface 22 is appropriately maintained, and thus slipping of the shoulder land portion 26s on a road surface is suppressed. In the tire 2, occurrence of uneven wear such as stepped wear is suppressed. From this viewpoint, the ratio of the radius Rs of the circular arc representing the profile of each side portion 54s, to the radius Rc of the circular arc representing the profile of the crown portion 54c, is preferably not less than 1.1 and preferably not greater than 1.4. From the same viewpoint, the radius Rc of the circular arc representing the profile of the crown portion 54c is preferably not less than 700 mm and preferably not greater than 900 mm.

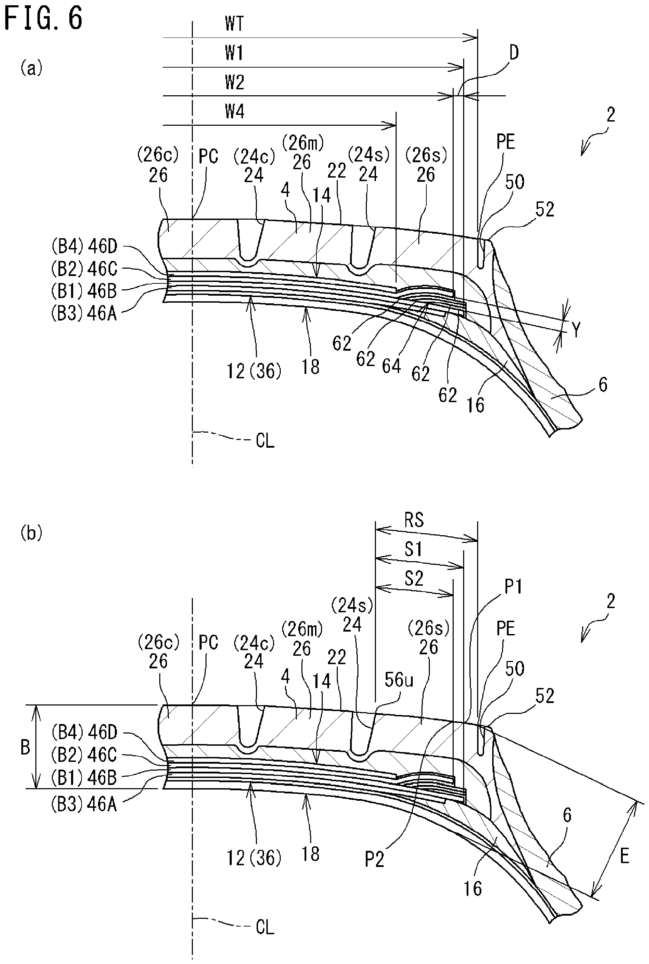

FIG. 6 shows a part of the cross-section of the tire 2 shown in FIG. 1. In FIG. 6, the right-left direction is the axial direction of the tire 2, and the up-down direction is the radial direction of the tire 2. The direction perpendicular to the surface of the sheet of FIG. 6 is the circumferential direction of the tire 2.

In FIG. 6(a), an arrow WT represents the width in the axial direction of the tread surface 22. The width WT in the axial direction is represented as the distance in the axial direction from one end PE of the tread surface 22 to the other end PE of the tread surface 22. An arrow W1 represents the width in the axial direction of the second layer 46B as the first reference layer B1. The width W1 in the axial direction is represented as the distance in the axial direction from one end of the second layer 46B to the other end of the second layer 46B. An arrow W2 represents the width in the axial direction of the third layer 46C as the second reference layer B2. The width W2 in the axial direction is represented as the distance in the axial direction from one end of the third layer 46C to the other end of the third layer 46C.

In the tire 2, the width W1 in the axial direction of the first reference layer B 1 is preferably equal to the width WT in the axial direction of the tread surface 22 or smaller than the width WT in the axial direction of the tread surface 22. In the tire 2, the holding force of the belt 14 with respect to the shoulder land portion 26s is appropriately maintained. Regarding the circumferential length of the tire 2, the circumferential length difference between the circumferential length of the equator portion and the circumferential length of the portion at the end PE of the tread surface 22 is appropriately maintained, and thus slipping of the shoulder land portion 26s on a road surface is suppressed. In the tire 2, occurrence of uneven wear such as stepped wear is suppressed.

In the tire 2, the ratio of the width W1 in the axial direction of the first reference layer B 1 to the width WT in the axial direction of the tread surface 22 is preferably not less than 0.85 and preferably not greater than 1.00.

When the ratio of the width W1 in the axial direction of the first reference layer B1 to the width WT in the axial direction of the tread surface 22 is set to be not less than 0.85, the belt 14 sufficiently holds the entirety of the tread 4. In the tire 2, peculiar dimensional growth in the outer edge portion of the shoulder land portion 26s, that is, at the portion at the end PE of the tread surface 22, is suppressed, and thus occurrence of shoulder wear in the shoulder land portion 26s is suppressed. In the tire 2, occurrence of uneven wear is suppressed. From this viewpoint, this ratio is more preferably not less than 0.90 and further preferably not less than 0.92.

When the ratio of the width W1 in the axial direction of the first reference layer B1 to the width WT in the axial direction of the tread surface 22 is set to be not greater than 1.00, the holding force of the belt 14 with respect to the shoulder land portion 26s is appropriately maintained. Regarding the circumferential length of the tire 2, the circumferential length difference between the circumferential length of the equator portion and the circumferential length of the portion at the end PE of the tread surface 22 is appropriately maintained, and thus slipping of the shoulder land portion 26s on a road surface is suppressed. In the tire 2, occurrence of uneven wear such as stepped wear is suppressed. From this viewpoint, this ratio is preferably not greater than 0.97 and more preferably not greater than 0.95.

In the tire 2, the ratio of the width W2 in the axial direction of the second reference layer B2 to the width WT in the axial direction of the tread surface 22 is preferably not less than 0.80. The second reference layer B2 contributes to holding the tread 4. In the tire 2, since the belt 14 sufficiently holds the entirety of the tread 4, peculiar dimension growth at the outer edge portion of the shoulder land portion 26s is suppressed. In the tire 2, occurrence of uneven wear such as shoulder wear is suppressed. From this viewpoint, this ratio is more preferably not less than 0.85 and further preferably not less than 0.90.

In the tire 2, an end of the second reference layer B2 is located inward of an end of the first reference layer B1 in the axial direction. Since the end of the second reference layer B2 and the end of the first reference layer B1 do not coincide with each other in the axial direction, concentration of strain on the end portion of the belt 14 is prevented. In the tire 2, damage such as looseness is less likely to occur at the end portion of the belt 14. Moreover, the holding force of the belt 14 with respect to the shoulder land portion 26s is appropriately maintained, and, regarding the circumferential length of the tire 2, the circumferential length difference between the circumferential length of the equator portion and the circumferential length of the portion at the end PE of the tread surface 22 is also appropriately maintained. Since slipping of the shoulder land portion 26s on a road surface is suppressed, occurrence of uneven wear such as stepped wear is suppressed in the tire 2.

In FIG. 6(a), a double-headed arrow D represents the distance in the axial direction from an end of the second layer 46B as the first reference layer B1 to an end of the third layer 46C as the second reference layer B2.

In the tire 2, the distance D in the axial direction from the end of the first reference layer B 1 to the end of the second reference layer B2 is preferably not less than 3 mm and preferably not greater than 8 mm.

When the distance D is set to be not less than 3 mm, the end of the second reference layer B2 and the end of the first reference layer B 1 are located at an appropriate interval in the axial direction. Concentration of strain on the end portion of the belt 14 is suppressed, and thus occurrence of damage such as looseness at the end portion of the belt 14 is prevented in the tire 2. From this viewpoint, the distance D is more preferably not less than 4 mm.

When the distance D is set to be not greater than 8 mm, the belt 14 sufficiently holds the entirety of the tread 4. Since peculiar dimension growth at the outer edge portion of the shoulder land portion 26s is suppressed, occurrence of shoulder wear in the shoulder land portion 26s is suppressed in the tire 2. From this viewpoint, the distance D is more preferably not greater than 7 mm.

In FIG. 6(a), a double-headed arrow Y represents the distance from the third layer 46C as the second reference layer B2 to the second layer 46B as the first reference layer B 1 at the end of the third layer 46C. The distance Y is measured along a line normal to the outer surface of the second layer 46B.

In the tire 2, the distance Y from the second reference layer B2 to the first reference layer B1 at the end of the second reference layer B2 is preferably not less than 2.5 mm and preferably not greater than 4.0 mm.

When the distance Y is set to be not less than 2.5 mm, the end portion of the second reference layer B2 is located at a sufficient interval from the end portion of the first reference layer B 1. In the tire 2, concentration of strain on the end portion of the belt 14 is sufficiently suppressed while the holding force of the belt 14 with respect to the tread 4 is ensured. In the tire 2, occurrence of uneven wear is suppressed while occurrence of damage at the end portion of the belt 14 is prevented. From this viewpoint, the distance Y is more preferably not less than 3.0 mm.

When the distance Y is set to be not greater than 4.0 mm, the end portion of the second reference layer B2 is located at an appropriate distance from the tread surface 22. A rise in contact pressure caused by the end portion of the second reference layer B2 being close to the tread surface 22 is suppressed, and thus occurrence of wear such as stepped wear in the shoulder land portion 26s is prevented in the tire 2. Furthermore, drooping of the end portion of the second reference layer B2 is prevented, and thus movement of the end portion of the second reference layer B2 is suppressed. Heat generation due to movement of this end portion is suppressed, and thus occurrence of damage such as looseness is prevented. From this viewpoint, the distance Y is more preferably not greater than 3.5 mm.

As shown in FIG. 6, each of the end portions of the second layer 46B and the third layer 46C is covered with a rubber layer 62. Two rubber layers 62 are further disposed between the end portions each covered with the rubber layer 62. In the tire 2, an edge member 64 including four rubber layers 62 in total is interposed between the end portion of the second layer 46B and the end portion of the third layer 46C. Accordingly, the end portion of the third layer 46C is raised radially outward, and is located so as to be separated from the end portion of the second layer 46B. The edge member 64 is formed from a crosslinked rubber. The above-described distance Y is also the thickness of the edge member 64.

In FIG. 6(a), a double-headed arrow W4 represents the width in the axial direction of the fourth layer 46D which is included in the belt 14. The width W4 in the axial direction is represented as the distance in the axial direction from one end of the fourth layer 46D to the other end of the fourth layer 46D.

In the tire 2, the ratio of the width W4 in the axial direction of the fourth layer 46D to the width WT in the axial direction of the tread surface 22 is preferably not less than 0.67. Accordingly, the fourth layer 46D contributes to holding the tread 4. In the tire 2, since the belt 14 sufficiently holds the entirety of the tread 4, peculiar dimension growth at the outer edge portion of the shoulder land portion 26s is suppressed. This ratio is preferably not greater than 0.75, from the viewpoint that: the holding force of the belt 14 with respect to the shoulder land portion 26s is appropriately maintained; and, regarding the circumferential length of the tire 2, the circumferential length difference between the circumferential length of the equator portion and the circumferential length of the portion at the end PE of the tread surface 22 is also appropriately maintained.

In FIG. 6(b), reference character P1 represents the point of intersection of the tread surface 22 and a straight line that passes through the end of the second layer 46B as the first reference layer B 1 and extends in the radial direction. The point of intersection P1 is a position, on the tread surface 22, corresponding to the end of the first reference layer B 1. Reference character P2 represents the point of intersection of the tread surface 22 and a straight line that passes through the end of the third layer 46C as the second reference layer B2 and extends in the radial direction. The point of intersection P2 is a position, on the tread surface 22, corresponding to the end of the second reference layer B2.

In FIG. 6(b), a double-headed arrow S1 represents the length, measured along the tread surface 22, from the inner edge 56u of the shoulder land portion 26s to the position P1, on the tread surface 22, corresponding to the end of the first reference layer B 1. In the present invention, the length S1 is the actual width of the first reference layer B1 in the shoulder land portion 26s. A double-headed arrow S2 represents the length, measured along the tread surface 22, from the inner edge 56u of the shoulder land portion 26s to the position P2, on the tread surface 22, corresponding to the end of the second reference layer B2. In the present invention, the length S2 is the actual width of the second reference layer B2 in the shoulder land portion 26s. A double-headed arrow RS in FIG. 6(b) represents the actual width of the shoulder land portion 26s shown in FIG. 3.

In the tire 2, the ratio of the actual width S1 of the first reference layer B 1 in the shoulder land portion 26s to the actual width RS of the shoulder land portion 26s is preferably not less than 0.8. Accordingly, in the tire 2, the belt 14 sufficiently holds the tread 4. In the tire 2, since peculiar dimension growth at the outer edge portion of the shoulder land portion 26s is suppressed, occurrence of shoulder wear in the shoulder land portion 26s is suppressed. In the tire 2, occurrence of uneven wear is suppressed. From this viewpoint, this ratio is more preferably not less than 0.85.

In the tire 2, the ratio of the actual width S1 of the first reference layer B 1 in the shoulder land portion 26s to the actual width RS of the shoulder land portion 26s is preferably not greater than 1.00. Accordingly, in the tire 2, the holding force of the belt 14 with respect to the shoulder land portion 26s is appropriately maintained. Regarding the circumferential length of the tire, the circumferential length difference between the circumferential length of the equator portion and the circumferential length of the portion at the end PE of the tread surface 22 is appropriately maintained, and thus slipping of the shoulder land portion 26s on a road surface is suppressed. In the tire 2, occurrence of uneven wear such as stepped wear is suppressed.

**EP 3 800 069 B1**

In the tire 2, the ratio of the actual width S2 of the second reference layer B2 in the shoulder land portion 26s to the actual width RS of the shoulder land portion 26s is preferably not less than 0.6. Accordingly, in the tire 2, the second reference layer B2 contributes to holding the tread 4. In the tire 2, the belt 14 sufficiently holds the entirety of the tread 4, and thus peculiar dimension growth at the outer edge portion of the shoulder land portion 26s is suppressed. In the tire 2, occurrence of uneven wear such as shoulder wear is suppressed. From this viewpoint, this ratio is more preferably not less than 0.70.

In the tire 2, the ratio of the actual width S2 of the second reference layer B2 in the shoulder land portion 26s to the actual width RS of the shoulder land portion 26s is preferably not greater than 0.9. Accordingly, in the tire 2, the holding force of the belt 14 with respect to the shoulder land portion 26s is appropriately maintained. Regarding the circumferential length of the tire, the circumferential length difference between the circumferential length of the equator portion and the circumferential length of the portion at the end PE of the tread surface 22 is appropriately maintained, and thus slipping of the shoulder land portion 26s on a road surface is suppressed. In the tire 2, occurrence of uneven wear such as stepped wear is suppressed. From this viewpoint, this ratio is more preferably not greater than 0.85.

In FIG. 6(b), a double-headed arrow B represents the thickness of the tire 2 at the equator PC. The thickness B is measured along the equator plane. A double-headed arrow E represents the thickness of the tire 2 at the end PE of the tread surface 22. The thickness E is measured along a line normal to the inner surface of the tire 2 and passing through the end PE of the tread surface 22.

In the tire 2, the thickness E of the tire 2 at the end PE of the tread surface 22 is preferably larger than the thickness B of the tire 2 at the equator PC. In the tire 2, the stiffness of the shoulder land portion 26s is sufficiently ensured. Since the shoulder land portion 26s has appropriate stiffness, wear is less likely to occur in the shoulder land portion 26s. In the tire 2, uneven wear is effectively suppressed. From this viewpoint, the ratio of the thickness E of the tire 2 at the end PE of the tread surface 22 to the thickness B of the tire 2 at the equator PC is preferably not less than 1.38 and preferably not greater than 1.45.

As is obvious from the above description, according to the present invention, the heavy duty pneumatic tire 2 in which occurrence of uneven wear is suppressed is obtained.

The embodiments disclosed above are merely illustrative in all aspects and are not restrictive. The technical scope of the present invention is defined by the appended claims and it is not limited to the above-described embodiments.

**EXAMPLES**

The following will describe the present invention in further detail by means of examples, etc., but the present invention is not limited to these examples.

[Example 1]

A heavy duty pneumatic tire (tire size = 12R22.5) having the basic structure shown in FIG. 1 and having specifications shown in Table 1 below was obtained.

In Example 1, the ratio (RS/RC) of the width RS of the shoulder land portion to the width RC of the center land portion was 1.4. The ratio (GS/GC) of the width GS of the shoulder circumferential groove to the width GC of the center circumferential groove was 0.85. The center stretch Sc was 2.6%. The shoulder stretch Ss was 2.0%. Therefore, the ratio of the center stretch Sc to the shoulder stretch Ss was 1.3.

In Example 1, narrow circumferential grooves and narrow land portions are provided. This is indicated as "Y" in the cell for a narrow land portion in Table 1.

In Example 1, the overall value of the RRO at the shoulder portion of the tread was 1.1 mm. This is indicated in the cell for "OA" in the table. The absolute value of the difference between the overall value of the RRO at the center portion and the overall value of the RRO at the shoulder portion was 0.3 mm. This is indicated in the cell for "OA difference" in the table. The absolute value (maximum value) of the difference between the RRO at the center portion and the RRO at the shoulder portion at each portion in the circumferential direction of the tread was 0.15 mm. This is indicated in the cell for "RRO difference" in the table. The RROs were measured using a uniformity testing machine after the tire was fitted onto a rim (8.25×22.5) and inflated with air to adjust the internal pressure of the tire to 850 kPa.

In Example 1, in the first layer of the belt, that is, in the third reference layer, the tilt angle Ac of each belt cord at the equator plane was 50°. In the second layer of the belt, that is, in the first reference layer, the tilt angle Bc of each belt cord at the equator plane was 15°. In the third layer of the belt, that is, in the second reference layer, the tilt angle Cc of each belt cord at the equator plane was 15°. In the fourth layer of the belt, that is, in the fourth reference layer, the tilt angle Dc of each belt cord at the equator plane was 18°.

In Example 1, in the first reference layer, the tilt angle Be of each belt cord at the layer end portion was equal to the tilt angle Bc of each belt cord at the equator plane. That is, the difference (Be-Bc) between the tilt angle Be and the tilt angle Be was 0°. This is indicated as "0" in the cell for angle difference in Table 1.

16

In Example 1, the first reference layer was formed such that the density βc of the belt cords at the equator plane and the density βe of the belt cords at the layer end portion were equal to each other. That is, the difference (βe-βc) between the density βe of the belt cords at the layer end portion and the density βc of the belt cords at the equator plane was 0 ends/5 cm. This is indicated as "0" in the cell for density difference in Table 1.

[Examples 2 to 5 and Comparative Example 2]

Tires of Examples 2 to 5 and Comparative Example 2 were obtained in the same manner as Example 1, except that the ratio (Sc/Ss), the center stretch Sc, and the shoulder stretch Ss were as shown in Table 1 below. The angle difference, the density difference, the overall value of the RRO at the shoulder portion, the absolute value (maximum value) of the difference between the RRO at the center portion and the RRO at the shoulder portion, and the absolute value of the difference between the overall value of the RRO at the center portion and the overall value of the RRO at the shoulder portion in each of the tires of Examples 2 to 5 and Comparative Example 2 were as shown in Table 1.

[Example 6 and Comparative Example 1]

Tires of Example 6 and Comparative Example 1 were obtained in the same manner as Example 1, except that no narrow circumferential groove and no narrow land portion were provided, and the ratio (RS/RC), the ratio (GS/GC), the ratio (Sc/Ss), the center stretch Sc, and the shoulder stretch Ss were as shown in Table 1 below. The angle difference, the density difference, the overall value of the RRO at the shoulder portion, the absolute value (maximum value) of the difference between the RRO at the center portion and the RRO at the shoulder portion, and the absolute value of the difference between the overall value of the RRO at the center portion and the overall value of the RRO at the shoulder portion in each of the tires of Example 6 and Comparative Example 1 were as shown in Table 1. The fact that no narrow circumferential groove and no narrow land portion were provided in Example 6 and Comparative Example 1 is indicated as "N" in the cell for narrow land portion in Table 1.

[Uneven Wear]

The test tires were fitted onto rims (size = 8.25×22.5) and inflated with air to adjust the internal pressure of each tire to 850 kPa. The tires were mounted to the front axle of a highway bus, and the highway bus was caused to run over 6 months without tire rotation. After the running, the appearance of each tire was observed to confirm the state of occurrence of uneven wear. The results are shown in Table 1 below on the basis of the following rating.

A: When occurrence of uneven wear was suppressed.
B: When uneven wear occurred but no change in running performance was observed.
C: When uneven wear occurred and a performance decrease that did not hinder running was observed.
D: When uneven wear occurred and it was determined that replacement was necessary.

[Table 1]

|  | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|
| RS/RC [-] | 1.4 | 1.4 | 1.4 | 1.4 | 1.4 | 1.1 | 1.1 | 1.4 |
| GS/GC [-] | 0.85 | 0.85 | 0.85 | 0.85 | 0.85 | 1.0 | 1.0 | 0.85 |
| Narrow land portion | Y | Y | Y | Y | Y | N | N | Y |
| Sc/Ss [-] | 1.3 | 1.5 | 2.0 | 2.5 | 1.4 | 2.5 | 4.0 | 6.0 |
| Sc [%] | 2.6 | 3.0 | 3.0 | 3.5 | 3.5 | 3.5 | 4.0 | 3.0 |
| Ss [%] | 2.0 | 2.0 | 1.5 | 1.4 | 2.5 | 1.4 | 1.0 | 0.5 |
| Angle difference [°] | 0 | 0 | 0 | 1 | 0 | 1 | 2 | 3 |
| Density difference [ends/5 cm] | 0 | 0 | 0 | 0 | 0 | 0 | -1 | -1 |
| OA [mm] | 1.1 | 1.2 | 0.80 | 0.85 | 1.4 | 0.85 | 1.6 | 1.7 |
| RRO difference [mm] | 0.15 | 0.18 | 0.10 | 0.09 | 0.18 | 0.12 | 0.25 | 0.35 |
| OA difference [mm] | 0.3 | 0.4 | 0.2 | 0.2 | 0.4 | 0.2 | 0.8 | 0.7 |

(continued)

|  | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|
| Shoulder wear | A | A | A | A | B | C | D | D |

As shown in Table 1, it is confirmed that occurrence of uneven wear is suppressed in the Examples. The Examples have better evaluations than the Comparative Examples. From the evaluation results, advantages of the present invention are clear.

## INDUSTRIAL APPLICABILITY

The above-described technology for suppressing occurrence of uneven wear can be applied to various tires.

## REFERENCE SIGNS LIST

2 tire
2r uncured tire
4 tread
6 sidewall
8 bead
10 chafer
12 carcass
14 belt
21 fiber reinforcing layer
22 outer surface (tread surface)
24, 24c, 24s circumferential groove
26, 26c, 26s, 26m land portion
36 carcass ply
38 main body portion
40 turned-up portion
46, 46A, 46B, 46C, 46D layer
46c belt cord
50 narrow circumferential groove
52 narrow land portion
54c crown portion
54s side portion
B1 first reference layer
B2 second reference layer
B3 third reference layer
B4 fourth reference layer
M mold
BD bladder

## Claims

1. A method for manufacturing a heavy duty pneumatic tire (2) including a tread (4) that comes into contact with a road surface and a belt (14) located radially inward of the tread (4), using a vulcanizing apparatus including a mold (M) for molding the tire (2), the method comprising:

   a step of preparing an uncured tire (2r) including the tread (4) and the belt (14);
   a step of putting the uncured tire (2r) into the mold (M); and
   a step of expanding the uncured tire (2r) in diameter and pressurizing and heating the uncured tire (2r) in the mold (M),

**characterized in that**
the belt (14) includes a plurality of layers stacked in a radial direction, and, among the plurality of layers, a layer having a largest width in an axial direction is a first reference layer (B1), a layer stacked at an outer side of the first reference layer is a second reference layer (B2), and a layer located at an innermost side in the radial direction is a third reference layer (B3),
a ratio of a center stretch Sc, at a center portion of the third reference layer (B3), indicated by the following formula (2) to a shoulder stretch Ss, at an end portion of the third reference layer, indicated by the following formula (1) is not less than 1 and not greater than 3, and
the shoulder stretch Ss is not less than 1%,
(shoulder stretch Ss)

$$100\times(Rsa-Rsb)/Rsb \qquad (1),$$

(center stretch Sc)

$$100\times(Rca-Rcb)/Rcb \qquad (2),$$

where Rsa is an inner diameter of the end portion of the third reference layer (B3) in the tire (2), Rsb is an inner diameter of the end portion of the third reference layer (B3) in the uncured tire (2r), Rca is an inner diameter of the center portion of the third reference layer (B3) in the tire (2), and Rcb is an inner diameter of the center portion of the third reference layer (B3) in the uncured tire (2), and Rsa and Rca are measured in a state where the internal pressure of the tire (2) is adjusted to 10% of the normal internal pressure, and no load is applied to the tire (2).

2. The method according to claim 1, wherein the shoulder stretch Ss is not greater than 2%.

3. The method according to claim 1 or 2, wherein the absolute value of the difference between the radial runout at the center portion and the radial runout at the shoulder portion at each portion in the circumferential direction of the tread (4) is not greater than 0.20 mm, wherein the radial runout is an index representing a vertical deviation of the tire 2 and the radial runout at the center portion the radial runout at the shoulder portion are measured as outlined in par. [0093] of the description.

4. The method according to any one of claims 1 to 3, wherein

the tread (4) has a tread surface (22) having a profile that is convex radially outward,
the tread surface (22) includes a crown portion (54c) including an equator (PC) of the tire (2), and a pair of side portions (54s) located outward of the crown portion in an axial direction,
a profile of the crown portion (54c) is represented by a circular arc having a radius Rc, and a profile of each of the side portions (54s) is represented by a circular arc having a radius Rs,
at least three circumferential grooves (24) are formed on the tread (4), thereby forming at least four land portions (26) aligned in the axial direction, and, among these land portions (26), a land portion located at an inner side in the axial direction is a center land portion (26c), and a land portion located at an outer side in the axial direction is a shoulder land portion (26s), and
the shoulder land portion (26s) continuously extends in the circumferential direction without interruption.

5. The method according to claim 4, wherein the tire (2) further comprises a narrow land portion (52) located outward of the shoulder land portion (26s) in the axial direction and extending in the circumferential direction,

a narrow circumferential groove (50) is present between the narrow land portion (52) and the shoulder land portion (26s), and
the narrow circumferential groove (50) is located outward of an end of the first reference layer (B 1) in the axial direction.

6. The method according to claim 4 or 5, wherein a width (W1) in the axial direction of the first reference layer (B 1) is equal to a width (WT) in the axial direction of the tread surface (22) or smaller than the width (WT) in the axial direction of the tread surface (22).

7. The method according to any one of claims 4 to 6, wherein an actual width (RS) of the shoulder land portion (26s) is larger than an actual width (RC) of the center land portion (26c).

8. The method according to any one of claims 1 to 7, wherein, in the first reference layer (B 1), a tilt angle (Be) of each of the belt cords (46c) at a layer end portion is equal to a tilt angle (Bc) of each of the belt cords (46c) at an equator plane.

9. The method according to any one of claims 1 to 8, wherein, in the first reference layer (B1) and the second reference layer (B2), the tilt angle (Bc, Cc) of each of the belt cords (46c) at the equator plane is not less than 12° and not greater than 20°.

10. The method according to any one of claims 4 to 9, wherein a thickness (E) of the tire (2) measured along a line normal to an inner surface of the tire (2) and passing through an end of the tread surface (22) is larger than a thickness (B) of the tire (2) measured along the equator plane.

11. The method according to any one of claims 4 to 10, wherein the radius Rs of the circular arc representing the profile of each of the side portions (54s) is larger than the radius Rc of the circular arc representing the profile of the crown portion (54c).

**Patentansprüche**

1. Verfahren zum Herstellen eines Schwerlast-Luftreifens (2), der eine Lauffläche (4), die mit einer Straßenoberfläche in Kontakt kommt, und einen Gürtel (14) umfasst, der radial innen von der Lauffläche (4) angeordnet ist, unter Verwendung einer Vulkanisiervorrichtung mit einer Form (M) zum Formen des Reifens (2), wobei das Verfahren umfasst:

einen Schritt eines Vorbereitens eines unvulkanisierten Reifens (2r), der die Lauffläche (4) und den Gürtel (14) umfasst;
einen Schritt eines Einlegens des unvulkanisierten Reifens (2r) in die Form (M);
und
einen Schritt eines Expandierens des unvulkanisierten Reifens (2r) im Durchmesser und eines Unterdrucksetzens und Erwärmens des unvulkanisierten Reifens (2r) in der Form (M),
**dadurch gekennzeichnet, dass**
der Gürtel (14) eine Vielzahl von in einer radialen Richtung gestapelten Schichten umfasst, und unter der Vielzahl von Schichten eine Schicht mit einer größten Breite in einer axialen Richtung eine erste Referenzschicht (B1) ist, eine Schicht, die an einer Außenseite der ersten Referenzschicht gestapelt ist, eine zweite Referenzschicht (B2) ist, und eine Schicht, die an einer innersten Seite in der radialen Richtung angeordnet ist, eine dritte Referenzschicht (B3) ist,
ein Verhältnis einer Mittendehnung Sc an einem mittleren Abschnitt der dritten Referenzschicht (B3), angegeben durch die folgende Formel (2), zu einer Schulterdehnung Ss an einem Endabschnitt der dritten Referenzschicht, angegeben durch die folgende Formel (1), nicht kleiner als 1 und nicht größer als 3 ist, und
die Schulterdehnung Ss nicht weniger als 1 % beträgt,
(Schulterdehnung Ss)

$$100 \times (Rsa-Rsb)/Rsb \qquad (1),$$

(Mittendehnung Sc)

$$100 \times (Rca-Rcb)/Rcb \qquad (2),$$

wobei Rsa ein Innendurchmesser des Endabschnitts der dritten Referenzschicht (B3) in dem Reifen (2) ist, Rsb ein Innendurchmesser des Endabschnitts der dritten Referenzschicht (B3) in dem unvulkanisierten Reifen (2r) ist, Rca ein Innendurchmesser des Mittelabschnitts der dritten Referenzschicht (B3) in dem Reifen (2) ist, und Rcb ein Innendurchmesser des Mittelabschnitts der dritten Referenzschicht (B3) in dem unvulkanisierten Reifen (2) ist, und Rsa und Rca in einem Zustand gemessen werden, in dem der Innendruck des Reifens (2) auf 10 % des normalen Innendrucks eingestellt ist und keine Last auf den Reifen (2) aufgebracht ist.

2. Verfahren nach Anspruch 1, wobei die Schulterdehnung Ss nicht größer als 2 % ist.

3. Verfahren nach Anspruch 1 oder 2, wobei der Absolutwert der Differenz zwischen dem Radialschlag an dem mittleren Abschnitt und dem Radialschlag am Schulterabschnitt an jedem Abschnitt in der Umfangsrichtung der Lauffläche (4) nicht größer als 0,20 mm ist, wobei der Radialschlag ein Index ist, der eine vertikale Abweichung des Reifens (2) ist und der Radialschlag an dem mittleren Abschnitt und der Radialschlag an dem Schulterabschnitt gemessen werden, wie es in Abs. [0093] der Beschreibung beschrieben ist.

4. Verfahren nach einem der Ansprüche 1 bis 3, wobei

die Lauffläche (4) eine Laufflächenoberfläche (22) mit einem radial nach außen konvexen Profil aufweist, die Laufflächenoberfläche (22) einen Kronenabschnitt (54c), der einen Äquator (PC) des Reifens (2) einschließt, und ein Paar Seitenabschnitte (54s) umfasst, die in einer axialen Richtung außen von dem Kronenabschnitt angeordnet sind, ein Profil des Kronenabschnitts (54c) durch einen Kreisbogen mit einem Radius Rc dargestellt ist, und ein Profil eines jeden der Seitenabschnitte (54s) durch einen Kreisbogen mit einem Radius Rs dargestellt ist, mindestens drei Umfangsrillen (24) an der Lauffläche (4) gebildet sind, wodurch mindestens vier Landabschnitte (26) gebildet sind, die in der axialen Richtung ausgerichtet sind, und unter diesen Landabschnitten (26) ein Landabschnitt, der sich an einer Innenseite in der axialen Richtung befindet, ein mittlerer Landabschnitt (26c) ist, und ein Landabschnitt, der sich an einer Außenseite in der axialen Richtung befindet, ein Schulterlandabschnitt (26s) ist, und der Schulterlandabschnitt (26s) sich kontinuierlich und ohne Unterbrechung in der Umfangsrichtung erstreckt.

5. Verfahren nach Anspruch 4, wobei

der Reifen (2) ferner einen schmalen Landabschnitt (52) aufweist, der in der axialen Richtung außen von dem Schulterlandabschnitt (26s) angeordnet ist und sich in der Umfangsrichtung erstreckt, eine schmale Umfangsrille (50) zwischen dem schmalen Landabschnitt (52) und dem Schulterlandabschnitt (26s) vorhanden ist, und die schmale Umfangsrille (50) in der axialen Richtung außen von einem Ende der ersten Referenzschicht (B1) angeordnet ist.

6. Verfahren nach Anspruch 4 oder 5, wobei eine Breite (W1) in der axialen Richtung der ersten Referenzschicht (B1) gleich einer Breite (WT) in der axialen Richtung der Laufflächenoberfläche (22) oder kleiner als die Breite (WT) in der axialen Richtung der Laufflächenoberfläche (22) ist.

7. Verfahren nach einem der Ansprüche 4 bis 6, wobei eine tatsächliche Breite (RS) des Schulterlandabschnitts (26s) größer ist als eine tatsächliche Breite (RC) des mittleren Landabschnitts (26c).

8. Verfahren nach einem der Ansprüche 1 bis 7, wobei in der ersten Referenzschicht (B1) ein Neigungswinkel (Be) eines jeden der Gürtelkorde (46c) an einem Schichtendabschnitt gleich einem Neigungswinkel (Bc) eines jeden der Gürtelkorde (46c) an einer Äquatorebene ist.

9. Verfahren nach einem der Ansprüche 1 bis 8, wobei in der ersten Referenzschicht (B1) und der zweiten Referenzschicht (B2) der Neigungswinkel (Bc, Cc) eines jeden der Gürtelkorde (46c) in der Äquatorebene nicht kleiner als 12 Grad und nicht größer als 20 Grad ist.

10. Verfahren nach einem der Ansprüche 4 bis 9, wobei eine Dicke (E) des Reifens (2), gemessen entlang einer Linie, die senkrecht zu einer inneren Oberfläche des Reifens (2) verläuft und durch ein Ende der Laufflächenoberfläche (22) geht, größer ist als eine Dicke (B) des Reifens (2), gemessen entlang der Äquatorebene.

11. Verfahren nach einem der Ansprüche 4 bis 10, wobei der Radius Rs des Kreisbogens, der das Profil eines jeden der Seitenabschnitte (54s) darstellt, größer ist als der Radius Rc des Kreisbogens, der das Profil des Kronenabschnitts (54c) darstellt.

**Revendications**

1. Procédé de fabrication d'un bandage pneumatique pour service intensif (2) incluant une bande de roulement (4) qui vient en contact avec une surface routière et une ceinture (14) située radialement à l'intérieur de la bande de roulement (4), en utilisant un appareil de vulcanisation incluant un moule (M) destiné à mouler le pneumatique (2), le procédé comprenant :

   une étape consistant à préparer un pneumatique non vulcanisé (2r) incluant la bande de roulement (4) et la ceinture (14) ;
   une étape consistant à mettre le pneumatique non vulcanisé (2r) dans le moule (M) ; et
   une étape consistant à étendre le pneumatique non vulcanisé (2r) en diamètre et à pressuriser et chauffer le pneumatique non vulcanisé (2r) dans le moule (M),
   **caractérisé en ce que**
   la ceinture (14) inclut une pluralité de couches empilées dans une direction radiale, et, parmi la pluralité de couches, une couche ayant une largeur la plus grande dans une direction axiale est une première couche de référence (B1), une couche empilée au niveau d'un côté extérieur de la première couche de référence est une deuxième couche de référence (B2),
   et une couche située au niveau d'un côté le plus à l'intérieur dans la direction radiale est une troisième couche de référence (B3),
   un rapport d'un étirement central Sc, au niveau d'une portion centrale de la troisième couche de référence (B3), indiqué par la formule (2) suivante, sur un étirement d'épaulement Ss, au niveau d'une portion d'extrémité de la troisième couche de référence, indiqué par la formule (1) suivante, n'est pas inférieur à 1 et n'est pas supérieur à 3, et
   l'étirement d'épaulement Ss n'est pas inférieur à 1 %,
   (étirement d'épaulement Ss)

$$100 \times (Rsa - Rsb) / Rsb \qquad (1)$$

   (étirement central Sc)

$$100 \times (Rca - Rcb) / Rcb \qquad (2),$$

   où Rsa est un diamètre intérieur de la portion d'extrémité de la troisième couche de référence (B3) dans le pneumatique (2), Rsb est un diamètre intérieur de la portion d'extrémité de la troisième couche de référence (B3) dans le pneumatique (2), et Rcb est un diamètre intérieur de la portion centrale de la troisième couche de référence (B3) dans le pneumatique non vulcanisé (2), et Rsa et Rca sont mesurés dans un état dans lequel la pression interne du pneumatique (2) est ajustée à 10 % de la pression interne normale, et dans lequel aucune charge n'est appliquée sur le pneumatique (2).

2. Procédé selon la revendication 1, dans lequel l'étirement d'épaulement Ss n'est pas supérieur à 2 %.

3. Procédé selon la revendication 1 ou 2, dans lequel la valeur absolue de la différence entre l'excentricité radiale au niveau de la portion centrale et l'excentricité radiale au niveau de la portion d'épaulement à chaque portion dans la direction circonférentielle de la bande de roulement (4) n'est pas supérieure à 0,20 mm, dans lequel l'excentricité radiale est un indice représentant une déviation verticale du pneumatique (2) et l'excentricité radiale au niveau de la portion centrale et l'excentricité radiale au niveau de la portion d'épaulement sont mesurées comme indiqué au paragraphe [0093] de la description.

4. Procédé selon l'une quelconque des revendications 1 à 3, dans lequel

   la bande de roulement (4) a une surface de bande de roulement (22) ayant un profil qui est convexe radialement vers l'extérieur,
   la surface de bande de roulement (22) inclut une portion de couronne (54c) incluant un équateur (PC) du pneumatique (2), et une paire de portions latérales (54s) situées à l'extérieur de la portion de couronne dans une direction axiale,
   un profil de la portion de couronne (54c) est représenté par un arc circulaire ayant un rayon Rc, et un profil de chacune des portions latérales (54s) est représenté par un arc circulaire ayant un rayon Rs,
au moins trois rainures circonférentielles (24) sont formées sur la bande de roulement (4), formant ainsi au moins quatre portions en relief (26) alignées dans la direction axiale, et, parmi ces portions en relief (26), une portion en relief située au niveau d'un côté intérieur dans la direction axiale est une portion en relief central (26c), et une portion en relief située au niveau d'un côté extérieur dans la direction axiale est une portion en relief d'épaulement (26s), et
la portion en relief d'épaulement (26s) s'étend en continu dans la direction circonférentielle sans interruption.

5. Procédé selon la revendication 4, dans lequel le pneumatique (2) comprend en outre une portion en relief étroite (52) située à l'extérieur de la portion en relief d'épaulement (26s) dans la direction axiale et s'étendant dans la direction circonférentielle,

    une rainure circonférentielle étroite (50) est présente entre la portion en relief étroite (52) et la portion en relief d'épaulement (26s), et
    la rainure circonférentielle étroite (50) est située à l'extérieur d'une extrémité de la première couche de référence (B1) dans la direction axiale.

6. Procédé selon la revendication 4 ou 5, dans lequel une largeur (W1) dans la direction axiale de la première couche de référence (B1) est égale à une largeur (WT) dans la direction axiale de la surface de bande de roulement (22) ou est plus petite que la largeur (WT) dans la direction axiale de la surface de bande de roulement (22).

7. Procédé selon l'une quelconque des revendications 4 à 6, dans lequel une largeur réelle (RS) de la portion en relief d'épaulement (26s) est plus grande qu'une largeur réelle (RC) de la portion en relief central (26c).

8. Procédé selon l'une quelconque des revendications 1 à 7, dans lequel, dans la première couche de référence (B1), un angle d'inclinaison (Be) de chacun des câblés de ceinture (46c) au niveau d'une portion d'extrémité de couche est égal à un angle d'inclinaison (Bc) de chacun des câblés de ceinture (46c) au niveau d'un plan d'équateur.

9. Procédé selon l'une quelconque des revendications 1 à 8, dans lequel, dans la première couche de référence (B1) et la seconde couche de référence (B2), l'angle d'inclinaison (Bc, Cc) de chacun des câblés de ceinture (46c) au niveau du plan d'équateur n'est pas inférieur à 12° et n'est pas supérieur à 20°.

10. Procédé selon l'une quelconque des revendications 4 à 9, dans lequel une épaisseur (E) du pneumatique (2) mesurée le long d'une ligne normale à une surface intérieure du pneumatique (2) et passant par une extrémité de la surface de bande de roulement (22) est plus grande qu'une épaisseur (B) du pneumatique (2) mesurée le long du plan d'équateur.

11. Procédé selon l'une quelconque des revendications 4 à 10, dans lequel le rayon Rs de l'arc circulaire représentant le profil de chacune des portions latérales (54s) est plus grand que le rayon Rc de l'arc circulaire représentant le profil de la portion de couronne (54c).

# FIG. 1

FIG. 2

FIG. 3

FIG. 4

FIG. 5

EP 3 800 069 B1

# FIG. 6

(a)

(b)

**EP 3 800 069 B1**

## REFERENCES CITED IN THE DESCRIPTION

**Patent documents cited in the description**

- JP 2008049967 A
- US 2001008158 A1
- US 5972142 A